(19) Europäisches Patentamt
European Patent Office
Office européen des brevets

(11) **EP 1 192 069 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(21) Anmeldenummer: **00935206.3**

(22) Anmeldetag: **13.06.2000**

(51) Int Cl.:
**B60T 8/00** *(2006.01)*       **B60K 28/16** *(2006.01)*

(86) Internationale Anmeldenummer:
**PCT/EP2000/005428**

(87) Internationale Veröffentlichungsnummer:
**WO 2000/078584 (28.12.2000 Gazette 2000/52)**

(54) **VERFAHREN UND VORRICHTUNG ZUR REGELUNG DES ANTRIEBSSCHLUPFES**

METHOD AND DEVICE FOR CONTROLLING TRACTION SLIP

PROCEDE ET DISPOSITIF DE REGULATION ANTIPATINAGE

(84) Benannte Vertragsstaaten:
**DE GB**

(30) Priorität: **17.06.1999 DE 19927660**
**06.06.2000 DE 10027628**

(43) Veröffentlichungstag der Anmeldung:
**03.04.2002 Patentblatt 2002/14**

(73) Patentinhaber: **Continental Teves AG & Co. oHG**
**60488 Frankfurt (DE)**

(72) Erfinder:
• **ROLL, Georg**
 **D-63150 Heusenstamm (DE)**
• **HALLER, Frank**
 **D-60385 Frankfurt (DE)**

(56) Entgegenhaltungen:
**EP-A- 0 498 174        DE-A- 3 634 240**
**DE-A- 3 914 364        DE-A- 4 236 004**

**Beschreibung**

Die Erfindung betrifft ein Verfahren und eine Vorrichtung zur Regelung des Antriebsschlupfes nach dem Oberbegriff der Ansprüche 1 und 19.

1. Problem

Bei einer Fahrt auf sehr unebenen oder glatten Böden können hohe Antriebsschlupfwerte an den Rädern eines Fahrzeugs auch dann auftreten, wenn der Fahrer nur wenig Gas gibt, der Motor also nur über ein geringes Überschuß- bzw. Vortriebsmoment verfügt- Dies ist bei unebenen Böden dadurch bedingt, daß einzelne Räder den Bodenkontakt zumindest vorübergehend teilweise oder völlig verlieren können. Auf glatten Böden kann der Reibwert zwischen Fahrbahn und einem oder mehreren Rädern so gering sein, daß selbst ein geringes Motormoment zum Durchdrehen der Räder führt.

Wenn in solchen Situationen eine Traktionskontrolle, d.h. die Vortriebskraftkontrolle, die über einen aktiven Druckaufbau an den Radbremskreisen wirkt (BTCS = Brake Traction Control System bzw. BASR = Bremsen-Antriebsschlupfregelung), eingreift, kann es zum 'Abwürgen' des Motors kommen, wenn das Fahrzeug über ein Schaltgetriebe verfügt und der Fahrer voll eingekuppelt hat. Eine solche Fahrweise ist auch bei geringen Fahrzeuggeschwindigkeiten durchaus üblich, wenn der Fahrer merkt, daß die Räder generell zum Durchdrehen neigen. Insbesondere ist ein volles Einkuppeln im Offroad-Betrieb dann sinnvoll, wenn das Fahrzeug über ein Vorgelegegetriebe verfügt und in einem niedrigen Geländegang extrem untersetzt gefahren wird.

2. Problemlösung nach dem Stand der Technik

Generell können bremsbedingte 'Abwürgesituationen' dadurch vermieden werden, daß während einer Traktionskontrolle eine permanente Überwachung beispielsweise der Motordrehzahl erfolgt. Unterschreitet beispielsweise die Motordrehzahl eine kritische Schwelle ('Abwürgedrehzahl'), so gilt die Gefahr eines Motorabwürgens als erkannt. Im Falle einer derartigen Abwürgegefahrt wird dann der aktive Bremsdruckaufbau an den Rädern abgebrochen, und es kann ein Druckabbau mit dem höchstmöglichen Abbaugradienten erfolgen, um den Motor zu entlasten (DE 36 34 240).

Der Druckabbau wird üblicherweise dann gestoppt, wenn die Motordrehzahl wieder Werte erreicht hat, die eine Stabilisierung des Motorlaufs bestätigen.

Eine derartige Maßnahme, verhindert in den meisten Fällen ein direktes Abwürgen des Motors. Der Nachteil besteht darin, daß die gesamte Regelung meist sehr inhomogen wirkt und zum häufigen Schütteln des Motors führt. In schwierigem Gelände kann ein Fahrer durch ein derartiges inhomogenes Eingreifen verunsichert werden und verleitet sein, noch weniger Gas zu geben, was das Verhalten der Regelung weiterhin verschlechtern kann. Je weniger Gas gegeben wird, um so größer ist die Gefahr des 'Abwürgens' des Motors im Falle eines aktiven Bremseneingriffs. Die völlige Bremsenentleerung kann darüber hinaus zu unerwarteten Fahrzeugreaktionen führen, wie beispielsweise zu einem plötzlichen Zurückrollen am Hang.

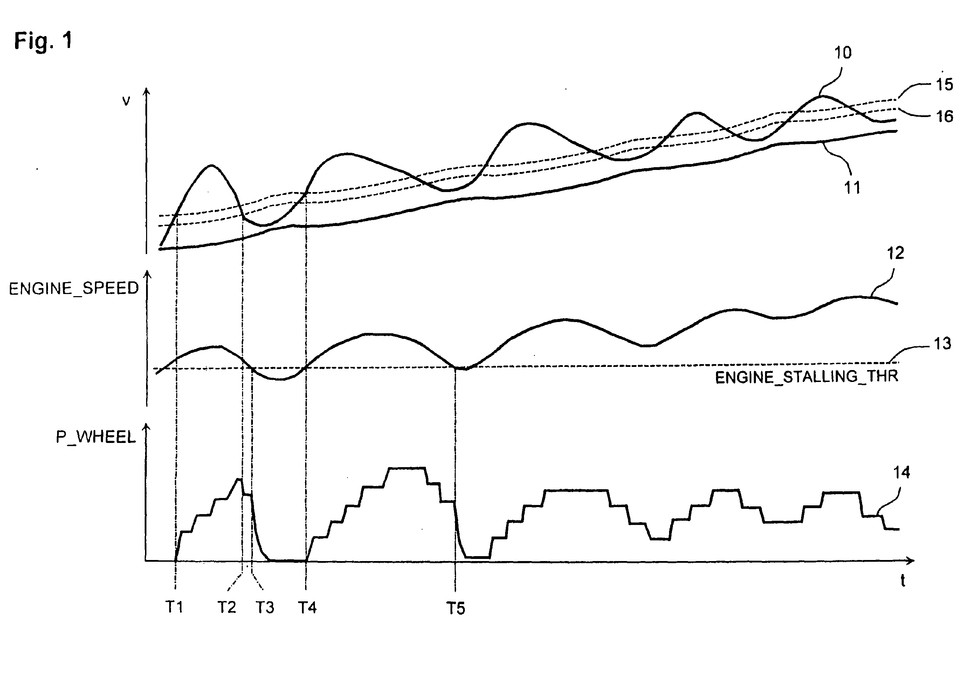

Fig. 1 zeigt eine übliche BTCS-Regelung am Beispiel eines durchdrehenden Rades.

Dabei stellt 10 den Geschwindigkeitsverlauf des zum Durchdrehen neigenden Rades dar, 11 ist die Fahrzeuggeschwindigkeit oder eine reglerintern geschätzte Ersatzgröße, 12 ist die Motordrehzahl, 13 eine Drehzahlschwelle und 14 der Verlauf des Druckes, den das BTCS in den zugehörigen Radbremskreis einspeist. Die Signale 15 und 16 zeigen zwei Geschwindigkeitsschwellen, die während der BTCS-Regelung auf der Basis von (prozentualen) Schlupfwerten berechnet werden und das Umschalten zwischen verschiedenen Regelungszuständen bestimmen.

Die Regelung startet mit einem Druckaufbau zum Zeitpunkt T1, wenn die Geschwindigkeit 10 des durchdrehenden Rades die obere Geschwindigkeitsschwelle 15 überschritten hat. Der anschließende gepulste Druckaufbau endet zum Zeitpunkt T2, wenn die Radgeschwindigkeit 10 unter eine untere Schwelle 16 gefallen ist. Dann beginnt ein üblicherweise gepulster Druckabbau. Unmittelbar danach (Zeitpunkt T3) fällt in dem gezeigten Beispiel die Motordrehzahl unter die Drehzahlschwelle 13, was nach der konventionellen Regelungsstrategie einen Druckabbau mit dem Maximalgradienten (ungepulst) auslöst. Um ein 'Abwürgen' des Motors rechtzeitig zu verhindern, wird dieser steile Druckabbau benötigt.

Nachdem die Motordrehzahl wieder angestiegen ist, orientiert sich der Druckaufbau nach dem Zeitpunkt T4 wieder am Schlupf des stark durchdrehenden Rades und wird entsprechend steil ausgeführt, was wieder zu einer starken Belastung des Motors und Reduzierung der Drehzahl mit erneuter Instabilität zum Zeitpunkt T5 führt.

Nach dem stark vereinfachten Konzept in Fig. 1 hängt die Umschaltung zwischen den Regelungszuständen 'Druckaufbau' und 'Druckabbau' von Schwellen ab, die aus Gründen der Übersichtlichkeit äquidistant zur (geschätzten) Fahrzeuggeschwindigkeit berechnet werden.

Der Nachteil der konventionellen Regelung liegt aber generell darin, daß eine Reaktion auf den Motor in Form eines Raddruckabbaus üblicherweise immer erst dann erfolgt, wenn die Motordrehzahl unter eine kritische Drehzahlschwelle gefallen ist. Ansonsten orientiert sich die Regelung und die Druckmodulation nur an dem Verhalten der durchdrehenden Räder.

Der Erfindung liegt daher die Aufgabe zugrunde, ein Verfahren und eine Vorrichtung zur Regelung des Antriebsschlupfes zu schaffen, die eine Verbesserung der Regelung ermöglichen.

Erfindungsgemäß wird diese Aufgabe dadurch gelöst, dass ein gattungsgemäßes Verfahren so durchgeführt wird, dass mindestens eine weitere Größe, die eine Laufstabilität des Motors wiedergibt, welche aus der Motordrehzahl und einer dynamischen Instabilitätsschwelle in die ein Fahrzeugspezifischer Basiswert und ein Proportional zum Gradienten der Motordrehzahl gebildeter Anteilswert eingeht, ermittelt und in die Regelung der Regelungszustände und/ oder die Umschaltung zwischen den Regelungszuständen einbezogen wird.

Hierdurch ist eine gezielte Regelung des Antriebsschlupfs unter Beachtung der Motorsituation möglich. Die Regelung orientiert sich an der Motorsituation, die in jeder Phase der Regelung des Antriebsschlupfes berücksichtigt wird. Die Laufstabilität des Motors bzw. eine davon abgeleitete Motorstabilitätsreserve ist dabei neben dem Antriebsschlupf (Radgeschwindigkeit und/oder -beschleunigung)eine Regelgröße, die bei der Bildung der Stellgröße berücksichtigt wird.

Gegenstand der Erfindung ist ferner, eine gattungsgemäße Vorrichtung zur Regelung des Antriebsschlupfes so auszugestalten, dass eine erste Ermittlungseinrichtung eine, ein Radverhalten (Geschwindigkeit und/oder Beschleunigung) an mindestens einem der angetriebenen Räder bestimmende Größe ermittelt und in Abhängigkeit von dieser Größe Regelungszustände, wie Bremsdruck aufbauen, Bremsdruck abbauen oder Bremsdruck halten, regelt und die Umschaltung zwischen den Regelungszuständen, wie Bremsdruck aufbauen, Bremsdruck abbauen oder Bremsdruck halten oder Antriebsschlupfregelung ein- bzw. ausschalten, steuert und eine zweite Ermittlungseinrichtung mindestens eine weitere Größe, die eine Laufstabilität des Motors wiedergibt, welche aus der Motordrehzahl und einer dynamischen Instabilitätsschwelle, in die ein Fahrzeugspezifischer Basiswert und ein proportional zum Gradienten der Motordrehzahl gebildeter Anteilswert eingeht, bestimmt, die die erste Ermittlungseinrichtung zur Regelung der Regelungszustände und/oder zur Umschaltung zwischen den Regelungszuständen einbezieht.

Zur weiteren Verbesserung des Regelverhaltens wird die zweite Größe fortlaufend bei der Regelung und/oder Umschaltung berücksichtigt.

Die Laufstabilität des Motors wird aus der Differenz einer Motordrehzahl$_{F\_E\_S}$ und einer dynamischen Instabilitätsschwelle des Motors vorzugsweise nach der folgenden Beziehung gebildet: ENGINE_STABILITY_RESERVE=K1●(FILTERED_ENGINE_SPEEP-ENGINE_STALLING_THR), mit ENGINE_STABILITY_RESERVE = Laufstabilität des Motors, K1 = eine von der Motorcharakteristik und vom mittleren Fahrzeuggewicht abhängige Konstante, FILTERED_ENGINE_SPEED = die gefilterte Motordrehzahl und

ENGINE_STALLING_THR ist die Instabilitätsschwelle.

Die Laufstabilität des Motors oder die Motorstabilitätsreserve wird gemäß der oben angegebenen Beziehung aus der Differenz der aktuellen (gefilterten) Motordrehzahl und einer dynamischen Instabilitätsschwelle gebildet, indem die dynamische Instabilitätsschwelle dadurch berechnet wird, dass von einem fahrzeugspezifischen Basiswert ein Anteil subtrahiert wird, der proportional zum Gradienten der Motordrehzahl bestimmt wird.

Die zweite Größe wird verwendet, um zwischen den druckauf- und -abbauenden Regelphasen des BTCS umzuschalten, indem ein Druckabbau eingeleitet wird, wenn die zweite Größe einen unteren Schwellwert, nämlich eine untere Stabilitätsschwelle, unterschreitet, und ein Druckaufbau erst erlaubt, wenn die zweite Größe einen oberen Schwellwert, nämlich eine obere Stabilitätsschwelle, überschreitet.

Im Falle eines Druckaufbaus während der Traktionsregelung wird ein maximaler Druckaufbaugradient durch die zweite Größe vorgegeben, wobei eine große Laufstabilität des Motors einen steileren Druckaufbau zuläßt, eine kleine Laufstabilität dagegen einen flacheren Druckaufbau erzwingt.

Die Abbau- und Aufbaugradienten werden in die Motorcharakteristik adaptiert, wobei ein höheres Motormoment einen schnelleren Aufbau und langsameren Abbau von Raddrücken ermöglicht. Die Begriffe "steilerer" und "flacherer" Druckauf- bzw. -abbau beziehen sich auf die Druckmodulationen, die die an sich bekannte BTCS-Regelung vorsehen würde.

Im Falle eines Druckabbaus während der Traktionsregelung wird ein minimaler Druckabbaugradient durch die zweite Größe vorgegeben, wobei eine große Laufstabilität des Motors einen flachen Druckabbau zuläßt, eine kleine Laufstabilität dagegen einen steileren Druckabbau erzwingt.

3. Verfahren zur motorbelastungsadaptiven Regelung

Das Verfahren nach der Erfindung sorgt auch bei sehr moderater Fahrweise dafür, daß ein mittleres, vom Motor zu bewältigendes Druckniveau in die Bremskreise der zum Durchdrehen neigenden Räder eingespeist wird, so daß eine Traktionskontrolle entsteht, die nicht nur die Raddschlupfsituation sondern auch die Motorsituation in Form eines optimalen Kompromisses berücksichtigt. Für den Fahrer stellt sich diese Regelung so homogen dar, daß ein 'Spielen mit dem Gaspedal' in schwierigen Situationen möglich ist, wodurch sich das Fahrzeug beispielsweise an einem steilen unebenen Hang "ausbalancieren" läßt.

Diese Maßnahme läßt sich auf beliebige Antriebsarten anwenden. Auch bei einem Automatikgetriebe, das üblicherweise selbst ein Abwürgen des Motors verhindert, wird mit dem genannten Verfahren eine deutliche Verbesserung des Regelungskomforts und der -funktion erzielt.

Das Verfahren beruht auf dem Gedanken, im Falle eines Durchdrehens eines Rades nicht nur den Traktionsschlupf als Regelgröße zu betrachten, sondern den zyklischen Druckauf- und -abbau an einem Rad permanent an die Motorsituation anzupassen.

Neigt ein Rad also bei geringer Gaspedalstellung bereits zum Durchdrehen, so darf zunächst nur ein verzögerter und flacher Druckaufbau durchgeführt werden. Wenn die Motordrehzahl durch diesen Druckaufbau reduziert wird, kann auch dann schon ein Druckstopp oder sogar -abbau erfolgen, wenn das Rad weiterhin Durchdrehtendenzen zeigt und die Motordrehzahl noch keine Schwelle unterschritten hat, die als kritische 'Abwürgedrehzahl' für den jeweiligen Motortyp gilt. Zeigt der Motor hingegen wieder eine Stabilisierung in Form einer steigenden Drehzahl an, so kann eine erneute Belastung durch Druckaufbau erfolgen. Dieser orientiert sich aber nicht am Grad des Raddruckdrehens, also am Radschlupf, sondern an der 'Stabilität' des Motors. Nur wenn der Motor mit hoher Drehzahl betrieben wird, geht die Traktionskontrolle in eine reine Radschlupfregelung über.

Diese Art der Regelung hat den Vorteil, daß der Motor von vornherein nur so stark belastet wird, daß voraussichtlich keine Instabilitätsneigung auftritt. Damit wird der Aufbau von hohen Druckspitzen vermieden, die ohnehin immer sehr schnell wieder abgebaut werden müßten, um ein Destabilisieren des Motors zu verhindern.

Regelungszustand und Grad der Druckmodulation werden dazu in Abhängigkeit einer definierten Motor-Stabilitätsreserve gebildet. Diese wird wiederum aus der Differenz der aktuellen Motordrehzahl und einer Instabilitätsschwelle gebildet.

Bei kleiner Stabilitätsreserve wird frühzeitig auf den Regelungszustand 'Druckhalten' oder sogar 'Druckabbau' umgeschaltet.

Der Regelungszustand 'Druckaufbau' darf hingegen nur dann aktiviert werden, wenn die Stabilitätsreserve einen hohen Schwellwert überschritten hat.

Im Regelungszustand 'Druckaufbau' wird der Druckaufbaugradient als Funktion der Stabilitätsreserve berechnet, indem bei kleinerer Reserve der Druck mit einem geringeren Gradienten aufgebaut wird.

Im Regelungszustand 'Druckabbau' wird der Druckabbaugradient ebenfalls als Funktion der Stabilitätsreserve berechnet, indem bei kleinerer Reserve der Druck mit einem größeren Gradienten abgebaut wird.

Wenn der Wert der Stabilitätsreserve 0 beträgt, erfolgt ein Druckabbau mit dem hydraulisch möglichen Maximalgradienten.

4. Detaillierte Beschreibung des Verfahrens

Ein Ausführungsbeispiel der Erfindung ist in der Zeichnung dargestellt und wird im folgenden näher beschrieben.

Es zeigen:

Figur 1    im Diagramm den Rad- und Fahrzeuggeschwindigkeitsverlauf, die Motordrehzahl und den Bremsdruckverlauf bei einer bekannten BTCS-Regelung

Figur 2    ein Zustandsgraph einer BTCS-Regelung nach der Erfindung

Figur 3    im Diagramm den Rad- und Fahrzeuggeschwindigkeitsverlauf, die Iststabilitätsschwelle, die Laufstabilität des Motors und den Bremsdruckverlauf nach der Erfindung

Figur 4    eine Schaltung zum Ermitteln der Laufstabilität des Motors

Figur 5    eine Schaltung zum Regeln des Antriebsschlupfes nach der Erfindung

Figur 6    eine Schaltung zum Ermitteln eines gepulsten Schaltsignales nach der Erfindung

Um eine motorbelastungsadaptive Regelung durchführen zu können, ist eine erweiterte Signalbildung erforderlich.

Insbesondere wird ein Signal gebildet, das die Bedeutung einer die 'Laufstabilität des Motors repräsentierende Größe' oder einer 'Motorstabilitätsreserve' hat:

```
ENGINE_STABILITY_RESERVE = K1 * (FILTERED_ENGINE_SPEED -
ENGINE_STALLING_THR)   (1)
```

Die Größe dieses Signals ist ein Maß dafür, wie stark der Motor durch Radbremseneingriffe belastet werden darf. Dazu wird zuerst die gefilterte Motordrehzahl FILTERED_ENGINE_SPEED berechnet, indem die über einen fahrzeuginternen Bus (beispielsweise CAN-Bus) eingelesene Motordrehzahl ENGINE_SPEED einer einfachen Filterung mit einem Filter erster oder n-ter Ordnung unterzogen wird. Dies ist notwendig, um mögliche Signalsprünge zu glätten, die durch das asynchrone Entsenden und Empfangen der Busdaten üblich sind.

Ein primitives digitales Filter läßt sich beispielsweise durch folgende Formel für ein proportionales Verzögerungsglied erster Ordnung (PT1-Glied) realisieren:

```
FILTERED_ENGINE_SPEED  =  FILTERED_ENGINE_SPEED + n *
(ENGINE_SPEED - FILTERED_ENGINE_SPEED)          (2)
```

mit n = 2, 3, 4 ...

Wenn diese Berechnung in jeder Regelschleife ausgeführt wird und die Durchlaufzeit der Regelschleife (Loop Time) T beträgt, dann ergibt sich eine Filterzeitkonstante von

```
T_filt = n*T              (3)
```

Entscheidend ist das Signal ENGINE_STALLING_THR, das eine dynamische Instabilitätsschwelle für den jeweiligen Motor darstellt. Das Signal wird gebildet durch überlagerung (Subtraktion) eines fahrzeugabhängigen Basiswertes BASE_THR und eines Anteils, der die Dynamik der Motordrehzahl berücksichtigt:

```
ENGINE_STALLING_THR = BASE_THR - K2 *
FILTERED_ENGINE_SPEED_GRADIENT          (4)
```

Dabei kann das Signal BASE_THR aus einer Konstante und ggf. einem weiteren Term gebildet werden, der von der Fahrzeuggeschwindigkeit abhängt:

```
BASE_THR = Engine_dependent_value +
f(VEHICLE_REFERENCE_VELOCITY)(5)
```

Damit kann die Tatsache berücksichtigt werden, daß mit höherer Fahrzeuggeschwindigkeit eine verringerte Gefahr des Motorabwürgens besteht.

Das Signal FILTERED_ENGINE_SPEED_GRADIENT stellt das dynamische Verhalten des Motors dar und wird aus der Differenz der Motordrehzahlen zweier aufeinander folgender Regelungszyklen berechnet:

```
FILTERED_ENGINE_SPEED_GRADIENT  =  FILTERED_ENGINE_SPEED
(t) - FILTERED_ENGINE_SPEED (t - T) (6)
```

Das bedeutet, daß das Signal FILTERED_ENGINE__SPEED_GRADIENT negativ wird, wenn die Motordrehzahl abnimmt. Bei Zunahme der Drehzahl wird der Gradient positiv.

Durch den Term 'K2 * FILTERED_ENGINE_SPEED_GRADIENT' wird der Instabilitäts-Schwellwert ENGINE_ STALLING_THR dann angehoben, wenn die Motordrehzahl abnimmt. Umgekehrt erfolgt eine Absenkung des Schwellwerts im Falle einer ansteigenden Motordrehzahl.

Damit wird das dynamische Verhalten des Motors bei der Berechnung der Stabilitätsreserve ENGINE_STABILITY_ RESERVE berücksichtigt. Die Reserve prinzipiell größer, wenn die Drehzahl hoch liegt bzw. eine Zunahme aufweist. Umgekehrt hat ein Motor dann eine kleine Stabilitätsreserve, wenn die Drehzahl niedrig liegt bzw. abnimmt.

Das Signal ENGINE_STABILITY_RESERVE wird nun dazu verwendet, die gesamte Druckmodulation der Traktionsregelung zu beeinflussen, indem einerseits die Bestimmung des Regelzustands (Druckaufbau, -halten, -abbau) und zum anderen auch das Maß einer Druckmodulation (Stärke eines Drucksprungs bzw. Pausenzeit zwischen zwei Drucksprüngen) durch den Wert des Signals beeinflußt wird.

<u>4.1 Bestimmung des Regelungszustands an einem Rad</u>

Um die Regelung und die Leistungsabgabe des Motors möglichst homogen zu gestalten, wird der Regelungszustand an einem durchdrehenden Rad nicht nur vom Radschlupf abhängig gemacht sondern auch von der Motorstabilitätsreserve.

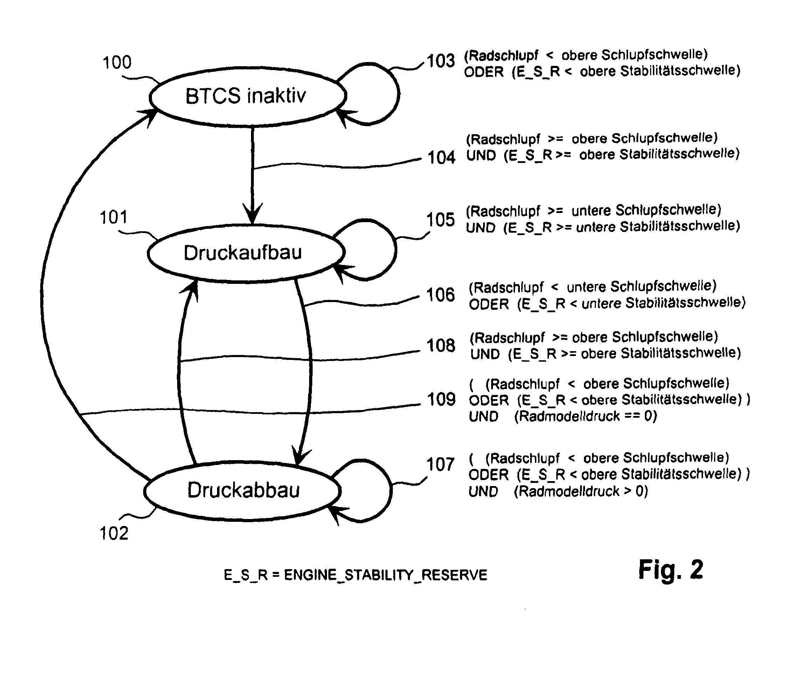

Dazu zeigt Fig. 2 ein gegenüber einer konventionellen Traktionskontrolle erweitertes Zustandsübergangsdiagramm. Nach der hier gezeigten deutlich vereinfachten BTCS-Basisstrategie existieren außer dem inaktiven Zustand 100 nur zwei weitere Regelungszustände, nämlich 'Druckaufbau' 101 und 'Druckabbau' 102. Denkbar wären weitere Regelungszustände, wie beispielsweise 'Druckhalten' oder eine differenziertere Lösung mit den Zuständen 'Druckhalten im Aufbau' und 'Druckhalten im Abbau'. Hier wird aus Gründen der Übersichtlichkeit das vereinfachte Konzept gemäß Fig. 2 zugrundegelegt, zumal ein Druckhaltezustand auch durch gepulsten Druckauf- und -abbau mit sehr langen Pausenzeiten realisiert werden kann. Generell ist das hier vorgestellte Verfahren der motoradaptiven BTCS-Regelung aber auch auf Konzepte mit beliebigen weiteren Regelungszuständen übertragbar.

Um für ein durchdrehendes Rad in den Regelungszustand 'Druckaufbau' 101 zu kommen, also einen der Funktionsübergänge 104 oder 108 zu vollziehen, wird im konventionellen Traktionssystem üblicherweise das Überschreiten einer oberen Schlupf- oder Geschwindigkeitsschwelle an dem betreffenden Rad gefordert. Die Schwelle kann aus einer Vielzahl von Eingangssignalen gebildet werden, was als Stand der Technik angesehen werden kann und daher hier nicht weiter behandelt wird.

Das hier vorgestellte Verfahren sieht vor, einen der Übergänge 104 oder 108 (je nach vorherigem Zustand) nur dann zu tolerieren, wenn zusätzlich zu der geforderten Schlupfbedingung auch eine hinreichende Motorstabilitätsreserve (E_ S_R = ENGINE_STABILITY_RESERVE) vorliegt. Aus diesem Grund werden beide Bedingungen im Diagramm in Fig. 2 mit einer logischen UND-Verknüpfung versehen.

Um im Zustand 'Druckaufbau' 101 zu bleiben (Funktionsübergang 105), genügt nach dem einfachen Konzept von Fig. 2 das Überschreiten von unteren Schwellen. Diese Hysterese ist wichtig, um kein permanentes Hin- und Herschalten zwischen den Zuständen zu provozieren.

Um in den Zustand 'Druckabbau' zu gelangen, also den Funktionsübergang 106 zu vollziehen, fordert das konventionelle System die Unterschreitung einer unteren Schlupfschwelle. Das hier vorgestellte Verfahren sieht vor, den übergang bereits dann durchzuführen, wenn die Motorstabilitätsreserve eine untere Stabilitätsschwelle unterschreitet. Aus diesem Grund werden beide Bedingungen im Diagramm in Fig. 2 mit einer logischen ODER-Verknüpfung versehen.

Der Zustand 'Druckabbau' bleibt so lange erhalten (Funktionsübergang 107), wie der Radschlupf unter der oberen Schlupfschwelle oder die Stabilitätsreserve unter der oberen Stabilitätsschwelle bleibt und der Druck in dem betroffenen Raddruckkreis noch nicht auf 0 reduziert wurde, was über ein einfaches Druckmodell geschätzt werden kann.

Bei Erreichen eines Modelldrucks von 0 bar wird das BTCS an dem Rad wieder inaktiv (Funktionsübergang 109), wenn weiterhin Radschlupf oder Stabilitätsreserve unter ihren oberen Schwellen liegen, und das System vollzieht anschließend den Funktionsübergang 103, bis wieder die Bedingung für den Übergang 104 erfüllt ist.

<u>4.2 Berechnung der Druckaufbau- und -abbaugradienten</u>

In einem hydraulischen System, das auf der Basis von Magnet-Schaltventilen arbeitet, kann der Gradient eines Druckauf- oder -abbaus dadurch variiert werden, daß sog. Normpulse zum Druckauf- und -abbau geschaltet werden, die durch eine unterschiedliche Anzahl von Pausenzyklen unterbrochen werden. Durch dieses Puls-Pausenverhältnis lassen sich 'beliebige' Gradienten erzielen, wobei der hydraulisch maximal mögliche Gradient dann aktiviert wird, wenn die Pausenzeit 0 gewählt wird.

Ein Normpuls kann beispielsweise dadurch realisiert werden, daß man einen Druckauf- oder -abbau für einen kompletten Regelungszyklus durchführt. Dies führt allerdings zu nicht konstanten Druckstufen. Eine bessere Möglichkeit besteht daher darin, über ein mitgeführtes Druckmodell den aktuellen Arbeitspunkt auf der Volumen-Druck-Kennlinie des Radbremskreises zu bestimmen und dann die Dauer der Ventilansteuerung so zu berechnen, daß sich unabhängig vom jeweiligen Arbeitspunkt ein konstanter Drucksprung von beispielsweise 2 oder 3 bar einstellt.

Unabhängig davon sieht das hier vorgestellte Verfahren vor, im Falle eines Druckaufbaus zu kontrollieren, ob die Pausenzeit zwischen den Druckaufbaupulsen von der konventionellen Logik zu kurz berechnet wurde, was zu einem zu steilen Druckaufbaugradienten bezüglich der Motorstabilitätsreserve führen würde.

Daher erfolgt ein direkter Vergleich des im konventionellen Regler anhand des Radverhaltens berechneten Signals PAUSE_TIME mit einem Wert, der umgekehrt proportional zur Stabilitätsreserve berechnet wird:

```
falls PAUSE_TIME < K3 / ENGINE_STABILITY_RESERVE

daraus folgt: PAUSE_TIME = K3 / ENGINE_STABILITY_RESERVE

(7) (Druckaufbau)
```

Dabei ist K3 eine Konstante, die von der Charakteristik der Bremse und der Höhe der Druckstufen abhängt.

Falls die Pausenzeit also zu kurz im Hinblick auf die Stabilitätsreserve berechnet wurde, so erfolgt eine Anhebung auf den Grenzwert K3 / ENGINE_STABILITY_RESERVE, was zu einem flacheren Druckaufbaugradienten und einer geringeren Motorbelastung führt.

Das hier vorgestellte Verfahren sieht weiterhin vor, im Falle eines Druckabbaus zu kontrollieren, ob die Pausenzeit zwischen den Druckabbaupulsen von der konventionellen Logik zu lang berechnet wurde, was zu einem zu langen Druckhalten

bzw. einem zu flachen Druckabbaugradienten bezüglich der Motorstabilitätsreserve führen würde.

Daher erfolgt ein direkter Vergleich des Signals PAUSE_TIME mit einem wert, der proportional zur Stabilitätsreserve berechnet wird:

```
falls  PAUSE_TIME > K4 * ENGINE_STABILITY_RESERVE

daraus folgt: PAUSE_TIME = K4 * ENGINE_STABILITY_RESERVE

(8) (Druckabbau)
```

Dabei ist K4 ebenfalls eine Konstante, die von der Charakteristik der Bremse und der Höhe der Druckstufen abhängt.

Falls die Pausenzeit also zu lang im Hinblick auf die Stabilitätsreserve berechnet wurde, so erfolgt eine Reduzierung auf den Grenzwert K4 * ENGINE_STABILITY_RESERVE, was zu einem steileren Druckabbaugradienten und einer geringeren Motorbelastung führt.

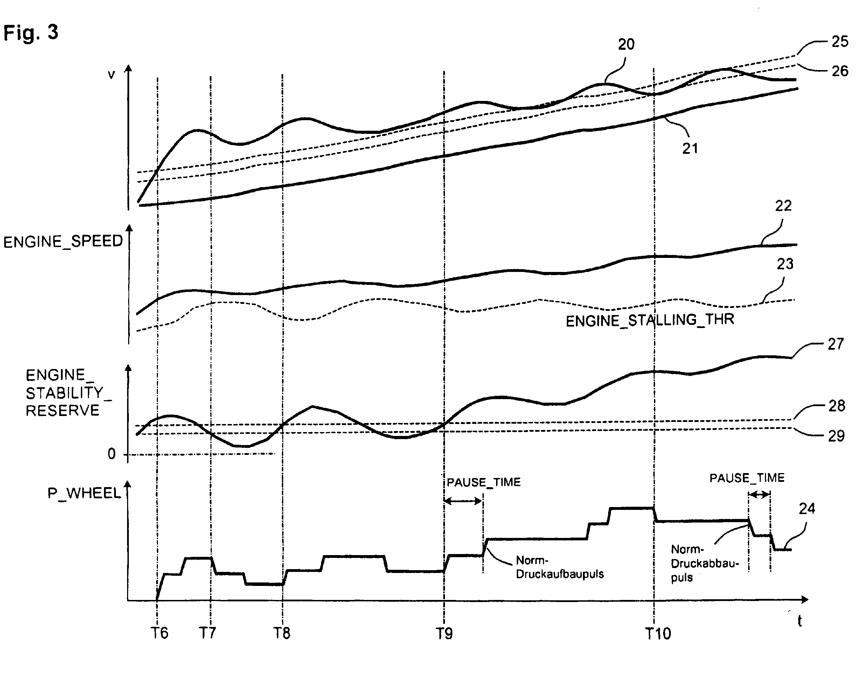

Fig. 3 zeigt das durch die Summe der Maßnahmen erzielte Druckprofil als Vergleich zum konventionellen Systemverhalten in Fig. 1.

Die Geschwindigkeit des durchdrehenden Rades wird durch das Signal 20 dargestellt, Signal 21 ist die (geschätzte) Fahrzeuggeschwindigkeit, und die Signale 25 und 26 zeigen eine obere und eine untere Geschwindigkeitsschwelle zur Bewertung des Radverhaltens. Beide Schwellen sind hier beispielhaft als äquidistante Geschwindigkeiten zur (geschätzten) Fahrzeuggeschwindigkeit berechnet (analog zum Verlauf in Fig. 1) .

Das Signal 22 zeigt die Motordrehzahl und Signal 23 den dynamischen Schwellwert ENGINE_STALLING_THR. Das Signal 27 stellt die aus den Signalen 22 und 23 berechnete ENGINE_STABILITY_RESERVE dar. Die Signale 28 und 29 zeigen eine obere und untere Schwelle für die Stabilitätsreserve. Das Signal 24 repräsentiert den Druck des geregelten Rades.

Zum Zeitpunkt T6 überschreitet die Radgeschwindigkeit die obere Schwelle 25. Da eine hinreichende Motorstabilität vorliegt (Signal 27 liegt über der oberen Schwelle 28) darf der Regelungszustand 'Druckaufbau' aktiviert werden. Da die Stabilitätsreserve 27 aber gering ist, erfolgt ein recht moderater Druckaufbau.

Zum Zeitpunkt T7 sinkt die Stabilitätsreserve 27 aufgrund der Motorbelastung unter die untere Schwelle 29, so daß auf 'Druckabbau' umgeschaltet wird, obwohl die Radgeschwindigkeit 20 noch deutlich über beiden Schwellen 25 und 26 liegt, das Rad also eindeutig zum Durchdrehen neigt. Der Druckabbau erfolgt aber nicht ungepulst, da die Stabilitätsreserve noch größer 0 ist, also noch keine direkte Motorinstabilität vorliegt.

Zum Zeitpunkt T8 ist die Stabilitätsreserve 27 wieder über die obere Schwelle 28 angestiegen, so daß ein erneuter Druckaufbau aktiviert wird, der ein weiteres Durchdrehen des Rades verhindert. Durch die zuvor höhere Radgeschwindigkeit konnte der Motor ebenfalls mit höherer Drehzahl drehen und ist damit in der Folgezeit besser belastbar.

Ab dem Zeitpunkt T9 liegt eine so hohe Stabilität vor, daß sich die Regelung wieder mehr am Radverhalten orientiert. Der Druckabbau zum Zeitpunkt T10 ist allein eine Folge des verringerten Radschlupfes.

Im Vergleich zur konventionellen Regelung ergibt sich das deutlich flachere Druckprofil 24 mit moderateren Druckabbau- und -aufbaugradienten. Die Schwankung der Motordrehzahl ist viel geringer, da die Belastung des Motors homogener verläuft.

Durch die permanente Anpassung der Regelung an das Motorverhalten wird vermieden, daß die Motordrehzahl unter die Instabilitätsschwelle ENGINE_STALLING_THR fällt.

Daraus resultiert auch eine homogenere Leistungs- und Momentenabgabe des Motors und eine höhere mittlere Drehzahl sowie ein höheres mittleres Motormoment.

Insgesamt führt diese Art der Regelung auch zu einem verbesserten Beschleunigungsverhalten des Fahrzeugs.

5. Realisierungsbeispiel

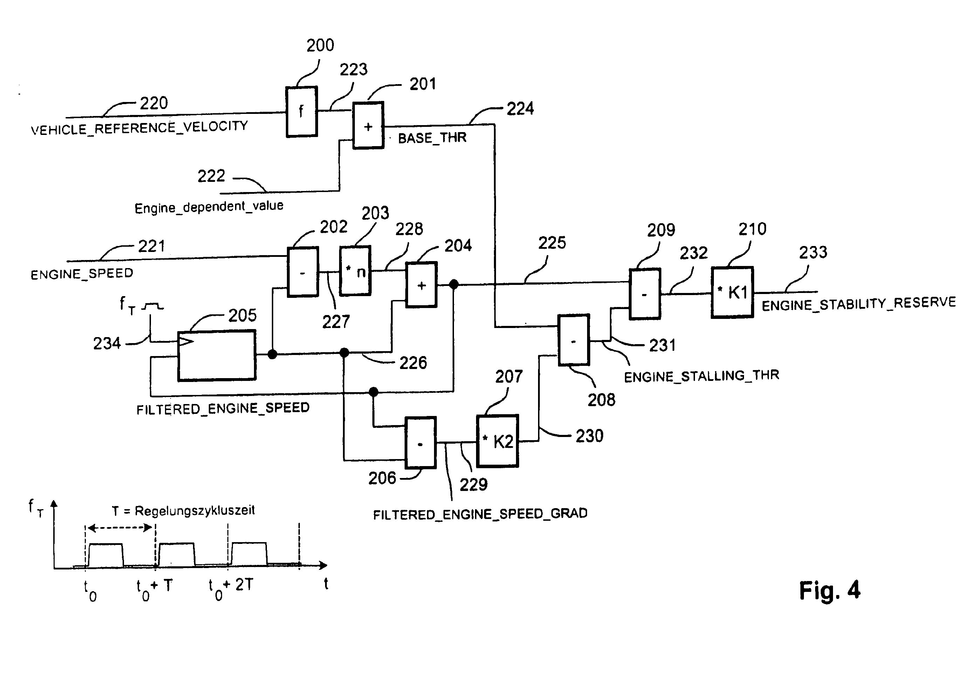

Die Figuren 4, 5 und 6 zeigen ein Realisierungsbeispiel. In Figur 4 ist eine Vorrichtung dargestellt, die aus den Eingangsgrößen VEHICLE_REFERENCE_VELOCITY auf der Leitung 220, also der geschätzten Fahrzeuggeschwindigkeit, und ENGINE_SPEED auf der Leitung 221, also der beispielsweise über einen CAN-Bus eingelesenen Motordrehzahl, das Ausgangssignal ENGINE_STABILITY_RESERVE auf der Ausgabeleitung 233 erzeugt, das die jeweilige Motorstabilitätsreserve repräsentiert.

Die Schaltungskomponenten 200 und 201 berechnen einen fahrzeuggeschwindigkeitsabhängigen Basiswert BASE_THR (Signal 224) gemäß Gleichung (5), indem auf eine fahrzeugspezifische Konstante Engine_dependent_value (Signal 222) das Signal 223 aufaddiert wird, das eine Funktion der Fahrzeuggeschwindigkeit darstellt. Diese Funktion kann im einfachsten Fall eine Multiplikation mit einem konstanten Faktor sein.

Als praktisches Beispiel wird hier angenommen, daß der Basiswert im Fahrzeugstillstand 1000 Upm betragen und eine Geschwindigkeitszunahme um 10km/h die Drehzahlschwelle um 100 Upm anheben soll.

Daraus ergibt sich für den BASE_THR:

$$\text{BASE\_THR} = 1000 \text{ Upm} + 10 \text{ Upm/km/h} *$$
$$\text{VEHICLE\_REFERENCE\_VELOCITY}$$

Die Konstante Engine_dependent_value wäre dann 1000 Upm, und die Funktionskomponente 200 ergebe sich als Multiplikator mit dem Faktor 10 Upm/km/h.

Die Komponenten 202, 203, 204 und 205 dienen der Berechnung einer gefilterten Motordrehzahl FILTERED_ ENGINE_SPEED auf Signalleitung 225 gemäß Gleichung (2).

Die Speicherzelle 205 übernimmt dazu mit der jeweils positiven Flanke des Regelungszyklustaktes f_T auf der Leitung 234 den Wert auf Leitung 225 und schaltet ihn nach Leitung 226 durch. Dieser Wert wird von der aktuellen Motordrehzahl auf Eingangsleitung 221 mit Hilfe der Komponente 202 subtrahiert, diese Differenz (Signal 227) mittels der Komponente 203 mit einem Faktor n multipliziert und das Ergebnis (Signal 228) durch die Komponente 204 zu dem in 205 auf Leitung 226 gespeicherten alten Wert der FILTERED_ENGINE_SPEED addiert. Dadurch ergibt sich gemäß Gleichung (2) der neue Wert der FILTERED_ENGINE_SPEED auf Leitung 225, der zu Beginn des nächsten Regelungszyklus' in den Speicher 205 übernommen und wieder als dann alter Wert auf die Ausgangsleitung 226 geschaltet wird.

Mit Hilfe der Komponente 206 wird die alte FILTERED_ENGINE_SPEED auf Leitung 226 von dem aktuellen Wert auf Leitung 225 subtrahiert und so der Gradient FILTERED_ENGINE_SPEED_GRAD auf Leitung 229 erzeugt. Gemäß Gleichung (4) wird dieses Signal mittels der Komponente 207 mit einem konstanten Faktor K2 multipliziert und das Ergebnis auf Leitung 230 mit Hilfe der Komponente 208 vom Signal BASE_THR auf Leitung 224 subtrahiert.

Damit ergibt sich auf Leitung 231 das Signal ENGINE_STALLING_THR, das die gewünschte dynamische Motordrehzahl-Schwelle repräsentiert, die als unterste stabile Motordrehzahl angesehen wird. Der Wert für K2 hängt vom Motortyp ab und kann im Bereich zwischen 0,1 s und 0,5 s liegen.

Ein beispielhafter wert für die Konstante K2 könnte 0.2s sein. Das bedeutet, daß bei einer Abnahme der Motordrehzahl um 1000Upm in einer Sekunde, also bei einem Gradienten von -1000Upm/s eine Anhebung des ENGINE_ STALLING_THR um 200Upm erfolgt.

Die Komponente 209 bildet die Differenz zwischen der tatsächlichen gefilterten Motordrehzahl FILTERED_ ENGINE_SPEED auf Leitung 225 und dem Signal ENGINE_STALLING_THR. Dieses Signal auf Leitung 232 wird gemäß Gleichung (1) noch mit einem Faktor K1 (Komponente 210) multipliziert, um das Signal ENGINE_STABILITY_RESERVE auf Ausgangsleitung 233 zu bilden, das die noch vorhandene Restbelastbarkeit des Motors repräsentiert.

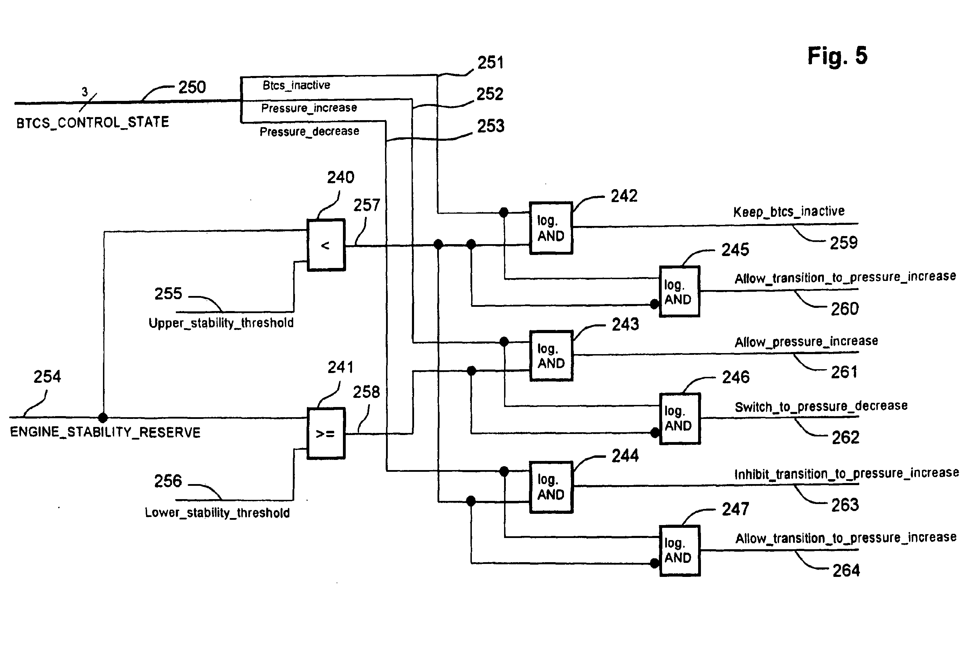

In Fig. 5 ist eine beispielhafte Vorrichtung dargestellt, die anhand der berechneten Motorstabilitätsreserve ENGINE_STABILITY_RESERVE auf der Eingangsleitung 254 die Zustandsübergänge an einem Rad des Fahrzeugs gemäß Fig. 2 beeinflußt.

Dazu werden die vom Standard-BTCS ermittelten Zustände an dem Radkreis zunächst über die 3-Bit-Leitung 250 eingelesen. Wenn ein Zustand (z.B. pressure_increase) erfüllt ist, ist die entsprechende Bit-Leitung (in diesem Fall 252) auf logisch '1', ansonsten auf '0' gesetzt. Mit Hilfe der Information auf den drei Leitungen 251, 252 und 253 ist daher eindeutig ein aktueller BTCS-Zustand festgelegt, wobei hier vereinfachend davon ausgegangen wird, daß es nach Fig. 2 nur die drei Zustände 'Regelung inaktiv', 'Druckaufbau' und 'Druckabbau' gibt.

Die Komponente 240 vergleicht die ENGINE_STABILITY_RESERVE mit einem oberen Schwellwert Upper_stability_ threshold. Wenn die Stabilitätsreserve unter der Schwelle liegt, wird die Leitung 257 auf logisch '1' geschaltet, ansonsten auf 0. Wenn die Leitung 257 auf '1' liegt, die Stabilitätsreserve also relativ gering ist, wird mit Hilfe des logischen UND-Gatters der Komponente 242 eine logische '1' auf die Leitung 259 geschaltet.

Dieses Signal 'Keep_btcs_inactive' gibt an den Standard-BTCS die Meldung, daß BTCS inaktiv bleiben soll, unabhängig vom Verhalten des betreffenden Rades, da eine BTCS-Aktivierung zu einer sofortigen Überbelastung des Motors und einem sinnlosen und unkomfortablen Eingriff führen könnte, der bezüglich der Traktionsverbesserung wirkungslos wäre.

Wenn die Leitung 257 aber auf logisch '0' liegt, also eine ausreichende Motorstabilitätsreserve vorliegt, wird der Ausgang 260 über die logische Eingangsnegation der Komponente 245 auf logisch '1' gezogen, falls auch das Signal 'BTCS_ inactive' auf Leitung 251 auf logisch '1' liegt. Dieses Signal 'Allow_transition_to_pressure_increase' zeigt dem Standard-BTCS an, daß ein Übergang vom inaktiven BTCS-Zustand in den Druckaufbau an dem betreffenden Rad möglich ist, wenn das Radverhalten den Druckaufbau erforderlich macht.

Weiterhin wird über die logische UND-Verknüpfung der Komponente 244 das Ausgangssignal 263 dann auf logisch '1' gelegt, wenn die Leitung 257 auf '1' liegt (Reserve klein) und sich der Standard-BTCS-Regler an dem betreffenden Rad im Zustand 'Druckabbau' befindet, die Leitung 253 also auf '1' liegt.

Durch das Signal 'Inhibit_transition_to_pressure_increase' auf Leitung 263 wird dem Standard-BTCS-Regler angezeigt, daß er im Zustand 'Druckabbau' bleiben soll, auch wenn das Radverhalten einen Druckaufbau erforderlich machen würde, da für einen weiteren Aufbau kein Motormoment verfügbar ist. Sollte das Moment aber ausreichen, also eine '0' auf Leitung 263 liegen, so erzeugt die logische Eingangsnegation der Komponente 247 eine logische '1' auf der Leitung 264, falls auch das Signal 'Pressure_decrease' auf Leitung 253 auf '1' liegt. Dann wird mit dem auf '1' gesetzten Signal 'Allow_transition_to_pressure_increase' anzeigt, daß ein Übergang von Druckab- auf Druckaufbau möglich ist, wenn das Standard-BTCS ein entsprechendes Radverhalten erkannt hat. Weiterhin wird das Signal ENGINE_STABILITY_ RESERVE auf Leitung 254 mit Hilfe der Komponente 241 mit dem festen unteren Schwellwert 'Lower_stability_threshold' auf Leitung 256 verglichen.

Wenn die Reserve größer als die Schwelle oder zumindest gleich groß ist, wird die Leitung 258 auf logisch '1' gesetzt, ansonsten auf '0'.

Wenn sich der Standard-BTCS-Regler im Zustand 'Pressure_increase' befindet (Leitung 252 liegt auf logisch '1') wird über die logische UND-Verknüpfung der Komponente 243 auch eine '1' auf die Leitung 261 geschaltet.

Das Signal 'Allow_pressure_increase' zeigt dem Standard-BTCS an, daß ein verbleiben in der Druckaufbauphase aufgrund der Motorstabilität möglich ist.

Sollte ENGINE_STABILITY_RESERVE aber unter dem unteren Schwellwert liegen, ergibt sich eine logische '0' auf Leitung 258 und damit auch auf Leitung 261. In diesem Fall wird über die logische Eingangsnegation der Komponente 246 eine '1' auf die Leitung 262 gelegt, falls auch das Signal 'Pressure_increase' auf Leitung 252 auf '1' liegt. Damit zeigt das gesetzte Signal 'Switch_to_pressure_decrease' dem Standard-BTCS-Regler an, daß ein Phasenübergang von Druckauf- auf -abbau unbedingt erforderlich ist, um den Motor nicht zu überlasten.

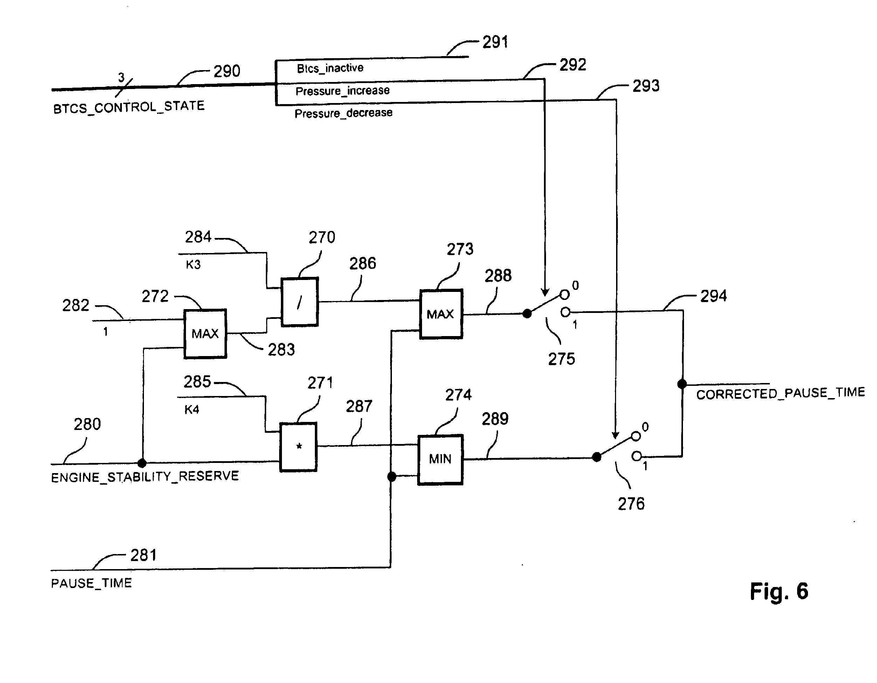

Fig. 6 stellt ein Realisierungsbeispiel für die Vorrichtung dar, die gemäß Gleichungen (7) und (8) aus der Motorstabilitätsreserve ENGINE_STABILITY_RESERVE korrigierte Pausenzeiten für das Standard-BTCS an einem Rad berechnet. Eine derartige Vorrichtung muß für alle angetriebenen Räder des Fahrzeugs vorgesehen werden, für die eine BTCS-Kontrolle konzipiert ist.

Prinzipiell gilt, daß im Falle eines Druckaufbaus an einem BTCS-geregelten Rad ein kleinerer Druckgradient vorgeschrieben wird, wenn die Motorstabilitätsreserve gering ist.

Im Falle eines Druckabbaus an einem Rad kann die Vorrichtung in Fig. 6 eine verkürzte Pausenzeit also einen größeren Druckabbaugradienten vorgeben, wenn die Reserve klein ist. Mit Hilfe der Komponente 272 wird zunächst das Maximum aus dem Wert 1 auf der Leitung 282 und der vorhandenen Stabilitätsreserve ENGINE_STABILITY_ RESERVE auf der Leitung 280 gebildet und auf die Leitung 283 geschaltet. Durch diesen Wert wird die Konstante auf Leitung 284 mit Hilfe der Komponente 270 dividiert. Auf Leitung 286 erscheint damit eine Druckaufbau-Pausenzeit, die die Vorrichtung allein aufgrund der Motorstabilitätsreserve als Minimum toleriert. Deshalb erfolgt mittels der Komponente 273 eine Maximumsbildung zwischen diesem Wert und der Pausenzeit PAUSE_TIME, die der BTCS-Regler für das Rad allein anhand des Radverhaltens berechnet hat. Wenn sich das BTCS an diesem Rad tatsächlich in einer Druckaufbauphase befindet, das Bit 'Pressure_increase' auf der Bitleitung 292 des Rad-Regelungstatus' der Eingangsleitung 290 also auf logisch '1' liegt, wird der Schalter 275 geschlossen und der Wert von Leitung 2BB tatsächlich auf die Ausgangsleitung 294 gelegt, so daß die vorgeschriebene Druckaufbau-Pausen als Signal 'CORRECTED_PAUSE_ TIME' zum Standard-BTCS zurückgeführt wird.

Parallel zu der beschriebenen Berechnung bilden die Komponenten 271 und 274 eine geeignete Pausenzeit im Falle des Druckabbaus an dem betreffenden Rad.

Zuerst multipliziert die Komponente 271 die Konstante K4 auf der Leitung 285 mit der Motorstabilitätsreserve ENGINE_ STABILITY_RESERVE auf Leitung 2BO.

Das Ergebnis auf der Leitung 287 stellt die maximale Druckabbau-Pausenzeit dar, die die Vorrichtung aufgrund der Motorsituation toleriert. Ober die Komponente 274 wird das Minimum dieses Wertes und der vom Standard-BTCS berechneten Pausenzeit PAUSE_TIME auf Leitung 281 gebildet. Dieser Minimumwert stellt die endgültige Pausenzeit für den Druckabbau an dem betreffenden Rad dar und wird über den Schalter 276 dann auf die Ausgangsleitung 294 geschaltet, wenn sich das betreffende Rad tatsächlich in der Druckabbauphase befindet, das Signal 'Pressure_decrease' auf der Statusleitung 293 also logisch '1' ist.

Wenn sich das Rad nicht in einer aktiven BTCS-Regelung befindet, liegt das Statussignal 'Btcs_inactive' auf Leitung 291 auf '1' und die Signale auf den Leitungen 292 und 293 beide auf '0'. In diesem Fall bleiben beide Schalter 275 und 276 geöffnet und die Vorrichtung gibt keine korrigierte Pausenzeit an das Standard-BTCS weiter.

Um die Konstanten K3 und K4 zu dimensionieren, wird hier eine beispielhafte Rechnung durchgeführt:

Gemäß Fig. 3 wird der Gradient eines Druckauf- oder -abbaus durch die Pausenzeit zwischen zwei Druckpulsen und die Stärke der Druckpulse selbst festgelegt.

Unter der Annahme, daß mittels einer geeigneten Druckmodellbildung der Bremse ein Aufschalten genormter Pulse möglich ist, berechnet sich der Gradient zu

Druckgradient = Normdruckpuls / PAUSE_TIME

Die ENGINE_STABILITY_RESERVE beinhaltet einen Wert, der gemäß Gleichung (1) aus einer Drehzahldifferenz multipliziert mit einem konstanten Faktor K1 gebildet wird. Wenn dieser Faktor beispielsweise den Wert 1/Upm hätte, so würde die ENGINE_STABILITY_RESERVE den Wert 100 annehmen, wenn die Drehzahldifferenz in Gleichung (1) den Wert 100Upm hat.

Wenn die Konstante K3 nun beispielsweise den Wert 25s hätte, würde bei einer Stabilitätsreserve von 100 eine Pausenzeit von 0.25 Sekunden berechnet. Bei einem Normpuls von 2bar, ergebe sich ein maximal tolerierter Druckgradient von 8bar/s.

Im Falle einer Stabilitätsreserve von 1000 ergäben sich 80bar/s.

Beim Druckabbau ist die Konstante K4 relevant.

Wenn K4 beispielsweise einen Wert von 0.0001s hätte, würde im Falle einer Stabilitätsreserve von 100 eine minimale Pausenzeit von 10 Millisekunden erlaubt. das ergebe mit dem Normpuls von 2bar einen Druckabbaugradienten von 200bar/s. Bei einer Reserve von 1000 würde die Pausenzeit 0.1s betragen und der Druckabbaugradient 20bar/s.

**Patentansprüche**

1.  Verfahren zur Regelung des Antriebsschlupfes, wobei eine ein Radverhalten an mindestens einem der angetriebenen Räder bestimmende Größe ermittelt und in Abhängigkeit von dieser Größe Regelungszustände, wie Bremsdruck aufbauen, Bremsdruck abbauen oder Bremsdruck halten, geregelt und die Umschaltung zwischen den Regelungszuständen, wie Bremsdruck aufbauen, Bremsdruck abbauen oder Bremsdruck halten oder Antriebsschlupfregelung ein- bzw. ausschalten, gesteuert werden **dadurch gekennzeichnet, daß** mindestens eine weitere Größe, die eine Laufstabilität des Motors wiedergibt, welche aus der Motordrehzahl und einer dynamischen Instabilitätsschwelle, in die ein fahrzeugspezifischer Basiswert und ein proportional zum Gradienten der Motordrehzahl gebildeter Anteilswert eingeht, ermittelt und in die Regelung der Regelungszustände und/oder die Umschaltung zwischen den Regelungszuständen einbezogen wird.

2.  Verfahren nach Anspruch 1, **dadurch gekennzeichnet, dass** die zweite Größe fortlaufend bei der Regelung und/ oder Umschaltung berücksichtigt wird.

3.  Verfahren nach Anspruch 1 oder 2, **dadurch gekennzeichnet, dass** die Laufstabilität des Motors aus der Differenz einer Motordrehzahl$_{F\_E\_S}$ und einer dynamischen Instabilitätsschwelle des Motors nach der folgenden Beziehung gebildet wird:

ENGINE_STABILITY_RESERVE=K1●(FILTERED_ENGINE_SPEED-ENGINE_STALLING_THR), mit ENGINE_STABILITY_RESERVE = Laufstabilität des Motors, K1 = eine von der Motorcharakteristik und dem mittleren Fahrzeuggewicht abhängige Konstante, FILTERED_ENGINE_SPEED = die gefilterte Motordrehzahl und ENGINE_STALLING_THR ist die Instabilitätsschwelle.

4. Verfahren nach Anspruch 3, **dadurch gekennzeichnet, dass** zur Bildung der Motordrehzahl$_{F\_E\_S}$ ein Filter, vorzugsweise ein Filter erster Ordnung mit einer Filterzeitkonstante T_filt = n*T verwendet wird, der den gefilterten wert der Motordrehzahl$_{F\_E\_S}$ nach der Beziehung
Filtered_Engine_Speed = Filtered_Engine_Speed + n*(Engine_Speed- Filtered_Engine_Speed) bildet, wobei bedeuten:
T = Durchlaufzeit der Regelschleife, Filtered_Engine_Speed=gefilterte Motordrehzahl, n = Nummer des aktuellen Loop(mit n=2, 3, 4...) und Engine_Speed = aktuelle Motordrehzahl.

5. Verfahren nach einem der Ansprüche 1 bis 4, **dadurch gekennzeichnet, dass** die dynamische Instabilitätsschwelle aus einem fahrzeugspezifischen Basiswert und einem proportional zum Gradienten der Motordrehzahl bestimmten Anteilswert ermittelt wird, wobei der Anteilswert von dem Basiswert subtrahiert wird.

6. Verfahren nach einem der Ansprüche 1 bis 5, **dadurch gekennzeichnet, dass** die dynamische Instabilitätsschwelle nach der folgenden Beziehung gebildet wird:

ENGINE_STALLING_THR = BASE_THR-
K2●FILTERED_ENGINE_SPEED_GRADIENT, mit ENGINE_STALLING_THR ist die dynamische Instabilitätsschwelle, BASE_THR ist ein fahrzeugabhängiger Basiswert, K2 ist eine von der Motordrehzahl abhängige Konstante, und
FILTERED_ENGINE_SPEED_GRADIENT ist der Gradient der gefilterten Motordrehzahl.

7. Verfahren nach einem der Ansprüche 1 bis 6, **dadurch gekennzeichnet, dass** der Basiswert nach der folgenden Beziehung gebildet wird:

BASE_THR =
ENGINE_dependent_value+f(VEHICLE_REFERENCE_VELOCITY), mit BASE THR ist der fahrzeugabhängige Basiswert,
ENGINE_dependent_value ist ein von Motordrehzahl abhängige Größe und F(VEHICLE_REFERENCE_ VELOCITY) ist eine von der Fahrzeuggeschwindigkeit abhängige Funktion.

8. Verfahren nach einem der Ansprüche 1 bis 7, **dadurch gekennzeichnet, dass** die Umschaltung von einem Druck aufbauenden zu einem Druck abbauenden Regelungszustand durchgeführt wird, wenn zumindest eine der folgenden Bedingung erfüllt ist:

erste Größe < untere Schlupfschwelle
zweite Größe< untere Stabilitätsschwelle
und dass die Umschaltung von einem Druck abbauenden Regelungszustand zu einem Druck aufbauenden Regelungszustand durchgeführt wird, wenn zumindest die folgenden Bedingungen erfüllt sind:
erste Größe ≥ obere Schlupfschwelle
zweite Größe ≥ obere Stabilitätsschwelle.

9. Verfahren nach einem der Ansprüche 1 bis 8, **dadurch gekennzeichnet, dass** die Umschaltung von einem Druck abbauenden Regelungszustand zu einem Ausschalten der Antriebsschlupfregelung durchgeführt wird, wenn zumindest die folgenden Bedingungen erfüllt sind:

erste Größe < obere Schlupfschwelle oder
zweite Größe < obere Stabilitätsschwelle
Radmodelldruck = 0, wobei der Radmodelldruck der in einem Druckmodell berechnete Ist-Bremsdruck in dem betrachteten Rad ist.

10. Verfahren nach einem der Ansprüche 1 bis 9, **dadurch gekennzeichnet, dass** eine Antriebsschlupfregelung als ausgeschaltet durchgeführt wird, wenn zumindestens eine der folgenden Bedingungen erfüllt ist:

erste Größe < obere Schlupfschwelle
zweite Größe < obere Stabilitätsschwelle.

**11.** Verfahren nach einem der Ansprüche 1 bis 10, **dadurch gekennzeichnet, dass** die Umschaltung von einer ausgeschalteten Antriebsschlupfregelung zu einem Druck aufbauenden Regelungszustand durchgeführt wird, wenn zumindestens die folgenden Bedingungen erfüllt sind:

erste Größe ≥ obere Schlupfschwelle
zweite Größe ≥ obere Stabilitätsschwelle.

**12.** Verfahren nach einem der Ansprüche 1 bis 11, **dadurch gekennzeichnet, dass** ein Druck aufbauender Regelungszustand beibehalten wird, wenn zumindest die folgenden Bedingungen erfüllt sind:

erste Größe ≥ untere Schlupfschwelle
zweite Größe > untere Stabilitätsschwelle.

**13.** Verfahren nach einem der Ansprüche 1 bis 12, **dadurch gekennzeichnet, dass** ein Druck abbauender Regelungszustand beibehalten wird, wenn zumindest die folgenden Bedingungen erfüllt sind:

erste Größe < obere Schlupfschwelle oder
zweite Größe < obere Stabilitätsschwelle
Raddruckmodell > 0, wobei der Radmodelldruck der in einem Druckmodell berechnete Ist-Bremsdruck in dem betrachteten Rad ist.

**14.** Verfahren nach einem der Ansprüche 1 bis 13, **dadurch gekennzeichnet, dass** der Druckauf- und -abbau durch graduelles Ansteuern einer Druckquelle und/oder Schaltventilen nach Maßgabe der ersten und zweiten Größe erzeugt wird.

**15.** Verfahren nach Anspruch 14, **dadurch gekennzeichnet, dass** der Druckaufbaugradient anhand des auf die erste Größe bezogenen Signals PAUSE_TIME ermittelt und mit einem umgekehrt proportional zur Laufstabilität vorgesehenen Wert nach der folgenden Beziehungen verändert wird:

PAUSE_TIME < K3/ENGINE_STABILITY_RESERVE
daraus folgt: PAUSE_TIME = K3/ENGINE_STABILITY_RESERVE, mit PAUSE_TIME = Pausenzeit des Puls-Pausenverhältnisses beim Druckauf- und -abbau, K3 = Konstante, die die Charakteristik der Bremse und die Höhe der Druckstufen berücksichtigt, ENGINE_STABILITY_RESERVE = Laufstabilität des Motors.

**16.** Verfahren nach Anspruch 15, **dadurch gekennzeichnet, dass** der so in Abhängigkeit von der zweiten Größe gebildete maximale Druckaufbaugradient bei einer großen Laufstabilität einen steileren Druckaufbau und bei einer kleinen Laufstabilität einen flacheren Druckaufbau veranlasst.

**17.** Verfahren nach Anspruch 14, **dadurch gekennzeichnet, dass** der Druckabbaugradient anhand des auf die erste Größe bezogenen Signals PAUSE_TIME ermittelt und mit einem proportional zur Laufstabilität vorgesehenen Wert nach der folgenden Beziehungen verändert wird:

PAUSE_TIME > K4●ENGINE_STABILITY_RESERVE
daraus folgt: PAUSE_TIME = K4●ENGINE_STABILITY_RESERVE, mit PAUSE_TIME = Pausenzeit des Puls-Pausenverhältnisses beim Druckauf- und -abbau, K4 = Konstante, die die Charakteristik der Bremse und die Höhe der Druckstufen berücksichtigt, ENGINE_STABILITY_RESERVE = Laufstabilität des Motors.

**18.** Verfahren nach Anspruch 17, **dadurch gekennzeichnet, dass** der so in Abhängigkeit von der zweiten Größe gebildete minimale Druckaufbaugradient bei einer großen Laufstabilität einen flacheren Druckabbau und bei einer kleinen Laufstabilität einen steileren Druckabbau veranlasst.

**19.** Vorrichtung zur Regelung des Antriebsschlupfes, wobei eine erste Ermittlungseinrichtung eine ein Radverhalten an mindestens einem der angetriebenen Räder bestimmende Größe ermittelt und in Abhängigkeit von dieser Größe Regelungszustände, wie Bremsdruck aufbauen, Bremsdruck abbauen oder Bremsdruck halten, regelt und die Umschaltung zwischen den Regelungszuständen, wie Bremsdruck aufbauen, Bremsdruck abbauen oder Bremsdruck halten oder Antriebsschlupfregelung ein- bzw. ausschalten steuert **gekennzeichnet, durch** eine zweite Ermittlungseinrichtung, die mindestens eine weitere Größe, die eine Laufstabilität des Motors wiedergibt, welche aus der Motordrehzahl und einer dynamischen Instabilitätsschwelle, in die ein fahrzeugspezifischer Basiswert und ein proportional zum Gradienten der Motordrehzahl gebildeter Anteilswert eingeht, bestimmt, die die erste Ermittlungseinrichtung zur Regelung der Regelungszustände und/oder zur Umschaltung zwischen den Regelungszuständen einbezieht.

**20.** Vorrichtung nach Anspruch 19, **dadurch gekennzeichnet, dass** die erste Ermittlungseinrichtung die zweite Größe fortlaufend bei der Regelung und/oder Umschaltung berücksichtigt.

**21.** Vorrichtung nach Anspruch 19 oder 20, **dadurch gekennzeichnet, dass** die zweite Ermittlungseinrichtung die Laufstabilität des Motors aus der Differenz einer Motordrehzahl$_{F\_E\_S}$ und einer dynamischen Instabilitätsschwelle des Motors bildet.

**22.** Vorrichtung nach einem der Ansprüche 19 bis 21, **dadurch gekennzeichnet, dass** die zweite Ermittlungseinrichtung die Laufstabilität nach der folgenden Beziehung berechnet:

ENGINE_STABILITY_RESERVE=K1●(FILTERED_ENGINE_SPEED-ENGINE_STALLING_THR), mit ENGINE_STABILITY_RESERVE = Laufstabilität des Motors, K1 = eine von der Motorcharakteristik und dem mittleren Fahrzeuggewicht abhängige Konstante, FILTERED_ENGINE_SPEED = gefilterte Motordrehzahl und ENGINE_STALLING_THR = Instabilitätsschwelle.

**23.** Vorrichtung nach einem der Ansprüche 19 bis 22, **dadurch gekennzeichnet, dass** die zweite Ermittlungseinrichtung ein Filter zur Bildung der gefilterten Motordrehzahl$_{F\_E\_S}$ mit einer Filterzeitkonstante T_filt = n*T aufweist, mit T=Durchlaufzeit der Regelschleife, n= Faktor.

**24.** Vorrichtung nach Anspruch 23, **dadurch gekennzeichnet, dass** das Filter einen Speicher (205) aufweist, der den vorangegangene Wert Filtered_Engine_Speed speichert, dass das Filter einen Subtrahierer (202) aufweist, der die Motordrehzahl ENGINE_SPEED von dem vorangegangenen Wert Filtered_Engine_Speed subtrahiert, dass das Filter einen Mutiplizierer aufweist, der die Differenz der Werte ENGINE_SPEED - Filtered_Engine_Speed mit einem Faktor n multipliziert und dass das Filter einem Addierer aufweist, der die mit dem Faktor n multiplizierte Differenz zu dem vorangegangenen Wert Filtered_Engine_Speed addiert.

**25.** Vorrichtung nach einem der Ansprüche 19 bis 24, **dadurch gekennzeichnet, dass** die zweite Ermittlungseinrichtung die dynamische Instabilitätsschwelle ENGINE_STALLING_THR aus einem fahrzeugspezifischen Basiswert BASE_THR und einem proportional zum Gradienten der Motordrehzahl bestimmten Anteilswert K2● FILTERED_ENGINE_SPEED_GRADIENT ermittelt.

**26.** Vorrichtung nach Anspruch 19, 21 oder 25, **dadurch gekennzeichnet, dass** ein Subtrahierer (206) vorgesehen ist, der den vorangegangenen Wert Filtered_Engine_Speed von aktuellen Wert Filtered_Engine_Speed subtrahiert und einem Multiplizierer (207) zuführt, der die Differenz mit einem konstanten Faktor K2 multipliziert.

**27.** Vorrichtung nach Anspruch 26, **dadurch gekennzeichnet, dass** der konstante Faktor K2 in einem Bereich zwischen 0,1 s und 0,5 s liegt, vorzugsweise 0,2s ist.

**28.** Vorrichtung nach einem der Ansprüche 19, 25 oder 26, **dadurch gekennzeichnet, dass** eine Recheneinheit (200) vorgesehen ist, die eine Funktion der Fahrzeuggeschwindigkeit VEHICLE_REFERENCE_VELOCITY ermittelt und dass das Signal VEHICLE_REFERENCE_VELOCITY an einen Eingang eines Addierers (201) geschaltet wird, an dessen anderen Eingang eine fahrzeugspezifische Konstante Engine_dependent_value anliegt und der Addierer auf das Signal Engine_dependent_value das Signal VEHICLE_REFERENCE_VELOCITY zu dem Signal BASE_THR aufaddiert.

**29.** Vorrichtung nach einem der Ansprüche 19 bis 28, **dadurch gekennzeichnet, dass** ein Subtrahierer(208) vorgesehen ist, dessen einer Eingang mit dem Addierer (201) und dessen anderer Eingang mit dem Multiplizierer (207) verbunden ist und der den Basiswert BASE_THR von dem Anteilswert K2●FILTERED_ENGINE_SPEED_GRADIENT subtrahiert und das Signal ENGINE_STALLING_THR bildet.

30. Vorrichtung nach einem der Ansprüche 19 bis 29, **dadurch gekennzeichnet, dass** ein Subtrahierer (209) und ein Multiplizierer (210) vorgesehen sind, dass der Subtrahierer (210) die Differenz aus den Signalen ENGINE_STALLING_THR und FILTERED _ENGINE_SPEED bildet und dass der Multiplizierer (210) dieses Signal mit einem Faktor K1 multipliziert.

31. Vorrichtung nach einem der Ansprüche 19 bis 30, **dadurch gekennzeichnet, dass** Vergleichsmittel (240, 241) und logische Schaltmittel (242, 243, 244, 245, 246, 247)vorgesehen sind, die eine Umschaltung von einem Druck aufbauenden zu einem Druck abbauenden Regelungszustand veranlassen, wenn zumindest eine der folgenden Bedingung erfüllt ist:

   erste Größe (BTCS_CONTROL_STATE) < untere Schlupfschwelle zweite Größe (ENGINE_STABILITY_RESERVE) < untere Stabilitätsschwelle
   und dass die Vergleichsmittel (240, 241) und logischen Schaltmittel (242, 243, 244, 245, 246, 247) die Umschaltung von einem Druck abbauenden bzw. Motormoment erhöhenden Regelungszustand zu einem Druck aufbauenden Regelungszustand veranlassen, wenn zumindest die folgenden Bedingungen erfüllt sind:
   erste Größe(BTCS_CONTROL_STATE) ≥ obere Schlupfschwelle zweite Größe (ENGINE_STABILITY_RESERVE) ≥ obere Stabilitätsschwelle.

32. Vorrichtung nach einem der Ansprüche 19 bis 31, **dadurch gekennzeichnet, dass** Vergleichsmittel (240, 241) und logische Schaltmittel (242, 243, 244, 245, 246, 247) vorgesehen sind, die eine Umschaltung von einem Druck abbauenden Regelungszustand zu einem Ausschalten der Antriebsschlupfregelung veranlassen, wenn zumindest die folgenden Bedingungen erfüllt sind:

   erste Größe < obere Schlupfschwelle oder
   zweite Größe < obere Stabilitätsschwelle
   Radmodelldruck = 0, wobei der Radmodelldruck der in einem Druckmodell berechnete Ist-Bremsdruck in dem betrachteten Rad ist.

33. Vorrichtung nach einem der Ansprüche 19 bis 32, **dadurch gekennzeichnet, dass** die Vergleichsmittel (240, 241) und logischen Schaltmittel (242, 243, 244, 245, 246, 247) eine Antriebsschlupfreglung als ausgeschaltet erkennen, wenn zumindestens eine der folgenden Bedingungen erfüllt ist:

   erste Größe < obere Schlupfschwelle
   zweite Größe < obere Stabilitätsschwelle.

34. Vorrichtung nach einem der Ansprüche 19 bis 33, **dadurch gekennzeichnet, dass** Vergleichsmittel (240, 241) und logische Schaltmittel (242, 243, 244, 245, 246, 247) vorgesehen sind, die eine Umschaltung von einer ausgeschalteten Antriebsschlupfreglung zu einem Druck aufbauenden Regelungszustand veranlassen, wenn zumindestens die folgenden Bedingungen erfüllt sind:

   erste Größe ≥ obere Schlupfschwelle
   zweite Größe ≥ obere Stabilitätsschwelle.

35. Vorrichtung nach einem der Ansprüche 19 bis 34, **dadurch gekennzeichnet, dass** Vergleichsmittel (240, 241) und logische Schaltmittel (242, 243, 244, 245, 246, 247)vorgesehen sind, die einen Druck aufbauenden Regelungszustand (105) anzeigen., wenn zumindest die folgenden Bedingungen erfüllt sind:

   erste Größe ≥ untere Schlupfschwelle
   zweite Größe ≥ untere Stabilitätsschwelle.

36. Vorrichtung nach einem der Ansprüche 19 bis 35, **dadurch gekennzeichnet, dass** Vergleichsmittel (240, 241) und logische Schaltmittel (242, 243, 244, 245, 246, 247)vorgesehen sind, die einen Druck abbauenden Regelungszustand anzeigen , wenn zumindest die folgenden Bedingungen erfüllt sind:

   erste Größe < obere Schlupfschwelle oder
   zweite Größe < obere Stabilitätsschwelle
   Raddruckmodell > 0, wobei der Radmodelldruck der in einem Druckmodell berechnete Ist-Bremsdruck in dem betrachteten Rad ist.

37. Vorrichtung nach einem der Ansprüche 19 bis 36, **dadurch gekennzeichnet, dass** eine dritte Ermittlungseinrichtung vorgesehen ist, die das graduelle Ansteuern einer Druckquelle und/oder von Schaltventilen der ersten Ermittlungseinheit nach Maßgabe der ersten und zweiten Größe modifiziert .

38. Vorrichtung nach Anspruch 37, **dadurch gekennzeichnet, dass** der Druckaufbaugradient anhand des auf die erste Größe bezogenen Signals PAUSE_TIME ermittelt und in einer Recheneinheit (272, 270, 273)mit einem umgekehrt proportional zur Laufstabilität vorgesehenen Wert nach der folgenden Beziehungen verändert wird:

PAUSE_TIME < K3/ENGINE_STABILITY_RESERVE
daraus folgt: PAUSE_TIME = K3/ENGINE_STABILITY_RESERVE, mit PAUSE_TIME = Pausenzeit des Puls-Pausenverhältnisses beim Druckauf- und -abbau, K3 = Konstante, die die Charakteristik der Bremse und die Höhe der Druckstufen berücksichtigt, ENGINE_STABILITY_RESERVE = Laufstabilität des Motors.

39. Vorrichtung nach Anspruch 38, **dadurch gekennzeichnet, dass** die Recheneinheit (272, 270, 273) einen Maximierer(272) aufweist, der aus dem Wert 1 und der zweiten Größe ein Maximum bildet, dass der Maximierer (272) mit einem Dividierer (270) verbunden ist, der die Konstante K3 durch das Maximum des Signals ENGINE_STABILITY_RESERVE dividiert und dass der Maximierer (273) aus dem in Abhängigkeit von der ersten Größe gebildeten Signal PAUSE_TIME und der Ausgangsgröße des Dividierers (270) den maximale Druckaufbaugradient bildet, und dass Logikmittel (290, 292, 275) in Abhängigkeit von der ersten Größe (292) bei einer großen Laufstabilität einen steileren Druckaufbau und bei einer kleinen Laufstabilität ein flacheren Druckaufbau schalten.

40. Vorrichtung nach Anspruch 37, **dadurch gekennzeichnet, dass** der Druckabbaugradient anhand des auf die erste Größe bezogenen Signals PAUSE_TIME ermittelt und mit einem proportional zur Laufstabilität vorgesehenen Wert nach der folgenden Beziehungen verändert wird:

PAUSE_TIME > K4●ENGINE_STABILITY_RESERVE
daraus folgt: PAUSE_TIME = K4●ENGINE_STABILITY_RESERVE, mit PAUSE_TIME = Pausenzeit des Puls-Pausenverhältnisses beim Druckauf- und -abbau, K4 = Konstante, die die Charakteristik der Bremse und die Höhe der Druckstufen berücksichtigt, ENGINE_STABILITY_RESERVE = Laufstabilität des Motors.

41. Vorrichtung nach Anspruch 38 oder 40, **dadurch gekennzeichnet, dass** die Recheneinheit (272, 270, 273) einen Multiplizierer (271) aufweist, der die zweite Größe ENGINE_STABILITY_RESERVE (280) mit der Konstanten K4 multipliziert, und dass ein Minimierer (274) aus dem in Abhängigkeit von der ersten Größe gebildeten Signal PAUSE_TIME und der Ausgangsgröße des Multiplizierers (274) den minimalen Druckaufbaugradient bildet, und dass Logikmittel (290, 292, 276) in Abhängigkeit von der ersten Größe (292) bei einer großen Laufstabilität ein flacherer Druckabbau und bei einer kleinen Laufstabilität ein steilerer Druckabbau schalten.

## Claims

1. Method for controlling traction slip, wherein a variable defining the wheel behaviour on at least one of the driven wheels is determined, and control states such as increase brake pressure, decrease brake pressure, or maintain brake pressure are controlled in dependence on this variable, and the change-over between the control states, such a increase brake pressure, decrease brake pressure, or maintain brake pressure, or switch on or off traction slip control are regulated,
**characterized in that** at least one further variable is detected which represents a running stability of the engine that is determined from the engine speed and a dynamic instability threshold, in which a vehicle-related base value and a share value is included that is produced proportionally to the gradient of the engine speed, the further variable being taken into account in the control of the control states and/or the change-over between the control states.

2. Method as claimed in claim 1,
**characterized in that** the second variable is continuously taken into consideration in the control and/or the change-over.

3. Method as claimed in claim 1 or 2,
**characterized in that** the running stability of the engine is calculated from the difference between an engine speed$_{F-E-S}$ and a dynamic instability threshold of the engine, according to the following relation:

ENGINE_STABILITY_RESERVE = K1●(FILTERED_ENGINE_SPEED-ENGINE_STALLING_THR), wherein ENGINE_STABILITY_RESERVE = running stability of the engine, K1 = a constant dependent on the engine characteristics and on the average vehicle weight, FILTERED_ENGINE_SPEED = the filtered engine speed, and ENGINE_STALLING_THR is the instability threshold.

4. Method as claimed in claim 3,
   **characterized in that** for producing the engine speed$_{F\_E\_S}$, a filter, preferably a filter of first order with a filter time constant T_filt = n*T, is employed producing the filtered value of the engine speed$_{F\_E\_S}$ according to the relation

   FILTERED_ENGINE_SPEED = FILTERED_ENGINE_SPEED + n * (ENGINE_SPEED - FILTERED_ENGINE_ SPEED), wherein
   T = the run time of the control loop
   FILTERED_ENGINE_SPEED = filtered engine speed, n = number of the current loop (with n = 2, 3, 4 ...) and ENGINE_SPEED = current engine speed. ,

5. Method as claimed in any one of claims 1 to 4,
   **characterized in that** the dynamic instability threshold is determined from a vehicle-related base value and a share value defined proportionally to the gradient of the engine speed, the share value being subtracted from the base value.

6. Method as claimed in any one of claims 1 or 5,
   **characterized in that** the dynamic instability threshold is produced according to the following relation:

   ENGINE_STALLING_THR = BASE_THR - K2 ● FILTERED_ENGINE_ SPEED_GRADIENT,
   wherein ENGINE_STALLING_THR represents the dynamic instability threshold, BASE_THR is a vehicle-responsive base value, K2 is a constant dependent on the engine speed, and
   FILTERED_ENGINE_SPEED_GRADIENT is the gradient of the filtered engine speed.

7. Method as claimed in any one of claims 1 to 6,
   **characterized in that** the base value is produced according to the following relation:

   BASE_THR = ENGINE_dependent_value + f(VEHICLE_REFERENCE_ VELOCITY), wherein BASE_THR is the vehicle-dependent base value, ENGINE_dependent_value is a variable dependent on the engine speed, and f(VEHICLE_REFERENCE_VELOCITY) is a function dependent on the vehicle speed.

8. Method as claimed in any one of claims 1 to 7,
   **characterized in that** the change-over from a control state of pressure increase to a control state of pressure decrease is performed when at least one of the following conditions is satisfied:

   first variable < lower slip threshold
   second variable < lower stability threshold,
   and **in that** the change-over from a control state of pressure decrease to a control state of pressure increase is performed when at least the following conditions are satisfied:
   first variable ≥ upper slip threshold
   second variable ≥ upper stability threshold.

9. Method as claimed in any one of claims 1 to 8,
   **characterized in that** the change-over from a control state of pressure decrease to a deactivation of the traction slip control is performed when at least the following conditions are satisfied:

   first variable < upper slip threshold, or
   second variable < upper stability threshold,
   wheel model pressure = 0, wherein the wheel model pressure is the actual brake pressure in the wheel considered, which is calculated in a pressure model.

10. Method as claimed in any one of claims 1 to 9,
    **characterized in that** traction slip control is executed as switched-off when at least one of the following conditions is satisfied:

first variable < upper slip threshold
second variable < upper stability threshold.

11. Method as claimed in any one of claims 1 to 10,
    **characterized in that** the change-over from a deactivated traction slip control to a control state of pressure increase is performed when at least the following conditions are satisfied:

    first variable $\geq$ upper slip threshold
    second variable $\geq$ upper stability threshold.

12. Method as claimed in any one of claims 1 to 11,
    **characterized in that** a control state of pressure increase is maintained when at least the following conditions are satisfied:

    first variable $\geq$ lower slip threshold
    second variable $\geq$ lower stability threshold.

13. Method as claimed in any one of claims 1 to 12,
    **characterized in that** a control state of pressure decrease is maintained when at least the following conditions are satisfied:

    first variable < upper slip threshold, or
    second variable < upper stability threshold,
    wheel model pressure > 0, wherein the wheel model pressure is the actual brake pressure in the wheel considered, which is calculated in a pressure model.

14. Method as claimed in any one of claims 1 to 13,
    **characterized in that** the pressure increase and decrease is produced by gradual actuation of a pressure source and/or switching valves in accordance with the first and second variables.

15. Method as claimed in claim 14,
    **characterized in that** the pressure increase gradient is determined by way of the signal PAUSE_TIME related to the first variable and is modified with a value that is inversely proportional to the running stability according to the following relations:

    PAUSE_TIME < K3/ENGINE_STABILITY_RESERVE
    from this follows: PAUSE_TIME = K3/ENGINE_STABILITY _RESERVE,
    wherein PAUSE_TIME = pause time of the pulse-pause ratio during pressure increase and decrease, K3 = constant which takes into consideration the characteristics of the brake and the level of the pressure stages, ENGINE_STABILITY_RESERVE = running stability of the engine.

16. Method as claimed in claim 15,
    **characterized in that** the maximum pressure increase gradient being produced depending on the second variable initiates a steeper pressure increase in the event of high running stability and a flatter pressure increase with low running stability.

17. Method as claimed in claim 14,
    **characterized in that** the pressure decrease gradient is determined by way of the signal PAUSE_TIME that is related to the first variable, and is modified with a value proportional to the running stability according to the following relations:

    PAUSE_TIME > K4 ● ENGINE_STABILITY_RESERVE
    from this follows: PAUSE_TIME = K4 ● ENGINE_STABILITY_ RESERVE,
    wherein PAUSE_TIME = pause time of the pulse-pause ratio during pressure increase and decrease, K4 = constant that takes into consideration the characteristics of the brake and the level of the pressure stages, ENGINE_STABILITY_RESERVE = running stability of the engine.

18. Method as claimed in claim 17,

**characterized in that** the minimum pressure increase gradient being produced depending on the second variable initiates a flatter pressure decrease with high running stability and a steeper pressure decrease with low running stability.

**19.** Device for controlling traction slip, wherein a first determination device determines a variable defining the wheel behaviour on at least one of the driven wheels and controls in dependence on this variable control states such as increase brake pressure, decrease brake pressure, or maintain brake pressure, and regulates the change-over between the control states, such as increase brake pressure, decrease brake pressure, or maintain brake pressure, or switch on or off traction slip control,

**characterized by** a second determination device which detects at least one further variable that represents the running stability of the engine being determined from the engine speed and a dynamic instability threshold, in which a vehicle-related base value and a share value is included that is produced proportionally to the gradient of the engine speed, and which includes the first determination device in the control of the control states and/or the change-over between the control states.

**20.** Device as claimed in claim 19,
**characterized in that** the first determination device continuously takes the second variable into consideration in the control and/or the change-over.

**21.** Device as claimed in claim 19 or 20,
**characterized in that** the second determination device produces the running stability of the engine from the difference between an engine speed$_{F\_E\_S}$ and a dynamic instability threshold of the engine.

**22.** Device as claimed in any one of claims 19 to 21,
**characterized in that** the second determination device calculates the running stability according to the following relation:

ENGINE_STABILITY_RESERVE = K1●(FILTERED_ENGINE_SPEED-ENGINE_STALLING_THR), wherein ENGINE_STABILITY_RESERVE = running stability of the engine, K1 = a constant dependent on the engine characteristics and on the average vehicle weight, FILTERED_ENGINE_SPEED = the filtered engine speed, and ENGINE_STALLING_THR = the instability threshold.

**23.** Device as claimed in any one of claims 19 to 22,
**characterized in that** the second determination device includes a filter for producing the filtered engine speed$_{F\_E\_S}$ with a filter time constant T_filt = n*T, wherein T = the run time of the control loop, n = factor.

**24.** Device as claimed in claim 23,
**characterized in that** the filter includes a memory (205) which stores the preceding value FILTERED_ENGINE_SPEED, **in that** the filter includes a subtractor (202) which subtracts the engine speed ENGINE_SPEED from the preceding value FILTERED_ENGINE_SPEED, **in that** the filter includes a multiplier which multiplies the difference between the values ENGINE_SPEED and FILTERED_ENGINE_SPEED with a factor n, and **in that** the filter includes an adder which adds the difference multiplied by the factor n to the preceding value FILTERED_ENGINE_SPEED.

**25.** Device as claimed in any one of claims 19 to 24,
**characterized in that** the second determination device determines the dynamic instability threshold ENGINE_STALLING_THR from a vehicle-related base value BASE_THR and a share value K2●FILTERED_ENGINE_SPEED_GRADIENT determined proportionally to the gradient of the engine speed.

**26.** Device as claimed in claim 19, 21, or 25,
**characterized in that** a subtractor (206) is provided, which subtracts the preceding value FILTERED_ENGINE_SPEED from the current value FILTERED_ENGINE_SPEED and sends it to a multiplier (207), which multiplies the difference by a constant factor K2.

**27.** Device as claimed in claim 26,
**characterized in that** the constant factor K2 lies in a range between 0.1 s and 0.5 s, preferably, amounts to 0.2 s.

**28.** Device as claimed in any one of claims 19, 25, or 26,
**characterized in that** a calculation unit (200) is provided, which determines a function of the vehicle speed VEHICLE_REFERENCE_VELOCITY, and **in that** the signal VEHICLE_REFERENCE_VELOCITY is applied to an input of an adder (201), to the other input of which a vehicle-related constant ENGINE_DEPENDENT_VALUE is applied, and the adder adds on the signal ENGINE_DEPENDENT_VALUE the signal VEHICLE_REFERENCE_VELOCITY to form the signal BASE_THR.

29. Device as claimed in any one of claims 19 to 28,
**characterized in that** a subtractor (208) is provided whose one input is connected to the adder (201) and whose other input is connected to the multiplier (207), and which subtracts the base value BASE_THR from the share value K2●FILTERED_ENGINE_SPEED_GRADIENT and produces the signal ENGINE_STALLING_THR.

30. Device as claimed in any one of claims 19 to 29,
**characterized in that** a subtractor (209) and a multiplier (201) are provided, **in that** the subtractor (210) produces the difference between the signals ENGINE_STALLING_THR and FILTERED_ENGINE_SPEED, and **in that** the multiplier (210) multiplies this signal by a factor K1.

31. Device as claimed in any one of claims 19 to 30,
**characterized in that** comparing elements (240, 241) and logical switching element (242, 243, 244, 245, 246, 247) are provided, which cause a change-over from a control state of pressure increase to a control state of pressure decrease when at least one of the following conditions is satisfied:

first variable (BTCS_CONTROL_STATE) < lower slip threshold second variable (ENGINE_STABILITY_RESERVE) < lower stability threshold,
and **in that** the comparing elements (240, 241) and logical switching elements (242, 243, 244, 245, 246, 247) cause the change-over from a control state of pressure decrease or engine torque increase to a control state of pressure increase when at least the following conditions are satisfied:
first variable (BTCS_CONTROL_STATE) ≥ upper slip threshold second variable (ENGINE_STABILITY_RESERVE) ≥ upper stability threshold.

32. Device as claimed in any one of claims 19 to 31,
**characterized in that** comparing elements (240, 241) and logical switching elements (242, 243, 244, 245, 246, 247) are provided, which cause a change-over from a control state of pressure decrease to a deactivation of traction slip control when at least the following conditions are satisfied:

first variable < upper slip threshold, or
second variable < upper stability threshold,
wheel model pressure = 0, wherein the wheel model pressure is the actual brake pressure in the considered wheel calculated in a pressure model.

33. Device as claimed in any one of claims 19 to 32,
**characterized in that** the comparing elements (240, 241) and logical switching elements (242, 243, 244, 245, 246, 247) identify a traction slip control as switched off when at least one of the following conditions is satisfied:

first variable < upper slip threshold, or
second variable < upper stability threshold,

34. Device as claimed in any one of claims 19 to 33,
**characterized in that** comparing elements (240, 241) and logical switching elements (242, 243, 244, 245, 246, 247) are provided, which cause a change-over from a deactivated traction slip control to a control state of pressure increase when at least the following conditions are satisfied:

first variable ≥ upper slip threshold, or
second variable ≥ upper stability threshold.

35. Device as claimed in any one of claims 19 to 34,
**characterized in that** comparing elements (240, 241) and logical switching elements (242, 243, 244, 245, 246, 247) are provided, which control a control state (105) of pressure increase when at least the following conditions are satisfied:

first variable ≥ lower slip threshold, or
second variable ≥ lower stability threshold.

**36.** Device as claimed in any one of claims 19 to 35,
**characterized in that** comparing elements (240, 241) and logical switching elements (242, 243, 244, 245, 246, 247) are provided, which indicate a control state of pressure decrease when at least the following conditions are satisfied:

first variable < upper slip threshold, or
second variable < upper stability threshold,
wheel pressure model > 0, wherein the wheel model pressure is the actual brake pressure in the considered wheel calculated in a pressure model.

**37.** Device as claimed in any one of claims 19 to 36,
**characterized in that** a third determination device is provided, which modifies the gradual actuation of a pressure source and/or switching valves of the first determination device in accordance with the first and second variables.

**38.** Device as claimed in claim 37,
**characterized in that** the pressure increase gradient is determined by way of the signal PAUSE_TIME that is related to the first variable, and is modified in a calculation unit (272, 270, 273) with a value that is inversely proportional to the running stability according to the following relations:

PAUSE_TIME < K3/ENGINE_STABILITY_RESERVE
from this follows: PAUSE_TIME = K3/ENGINE_STABILITY _RESERVE,
wherein PAUSE_TIME = pause time of the pulse-pause ratio during pressure increase and decrease, K3 = constant, which takes into consideration the characteristics of the brake and the level of the pressure stages, ENGINE_STABILITY_RESERVE = running stability of the engine.

**39.** Device as claimed in claim 38,
**characterized in that** the calculation unit (272, 270, 273) includes a maximizer (272), which calculates a maximum from the value 1 and the second variable, **in that** the maximizer (272) is connected to a divider (270), which divides the constant K3 by the maximum of the signal ENGINE_STABILITY_RESERVE, and **in that** the maximizer (272) produces the maximum pressure increase gradient from the signal PAUSE_TIME produced in dependence on the first variable and the output variable of the divider (270), and **in that** logic elements (290, 292, 275) in dependence on the first variable (292) initiate a steeper pressure increase in the event of a high running stability and a flatter pressure increase in the event of a low running stability.

**40.** Device as claimed in claim 37,
**characterized in that** the pressure decrease gradient is determined by way of the signal PAUSE_TIME that is related to the first variable and is modified with a value proportional to the running stability according to the following relations:

PAUSE_TIME > K4 ● ENGINE_STABILITY_RESERVE
from this follows: PAUSE_TIME = K4 ● ENGINE_STABILITY_ RESERVE,
wherein PAUSE_TIME = pause time of the pulse-pause ratio during pressure increase and decrease, K4 = constant that takes into consideration the characteristics of the brake and the level of the pressure stages, ENGINE_STABILITY_RESERVE = running stability of the engine.

**41.** Device as claimed in claim 38 or 40,
**characterized in that** the calculation unit (272, 270, 273) includes a multiplier (271) which multiplies the second variable ENGINE_STABILITY_RESERVE (280) with the constant K4, and **in that** a minimizer (274) produces the minimum pressure increase gradient from the signal PAUSE_TIME produced in dependence on the first variable and the output variable of the multiplier (274), and **in that** logic elements (290, 292, 275) in dependence on the first variable (292) initiate a flatter pressure decrease in the event of a high running stability and a steeper pressure decrease in the event of a low running stability.

**Revendications**

1. Procédé à régler le glissement de traction, dans lequel une valeur définissant un comportement de roue au moins à l'une des roues motrice est déterminée, et règle des états de réglage, comme l'accroissement, réduction ou maintien de la force de freinage, en dépendance de cette valeur, le changement entre les états de réglage, comme l'accroissement, réduction ou maintien de la force de freinage ou mise dans ou hors circuit du réglage de glissement de traction, étant commandés, **caractérisé en ce qu'**au moins une valeur secondaire indiquant une stabilité de roulement du moteur résultant de la vitesse du moteur et d'un seuil d'instabilité dynamique et contenant une valeur de base spécifique de véhicule et une valeur formée proportionnellement au gradient de la vitesse de moteur, est déterminée et incluse dans la commande des états de réglage et/ou le changement entre les états de réglage.

2. Procédé selon la revendication 1, **caractérisé en ce que** la valeur secondaire est constamment considéré dans le réglage et/ou le changement entre les états de réglage.

3. Procédé selon les revendications 1 ou 2, **caractérisé en ce que** la stabilité de roulement du moteur se forme de la différence d'une vitesse de moteur $_{F\_E\_S}$ et d'un seuil d'instabilité dynamique du moteur selon la relation comme suite:

ENGINE_STABILITY_RESERVE=K1●(FILTERED_ENGINE_SPEED-ENGINE_STALLING_THR), où ENGINE_STABILITY_RESERVE = stabilité de roulement du moteur, K1 = une constante dépendante de la caractéristique du moteur et du poids moyen de la véhicule, FILTERED_ENGINE_SPEED =la vitesse de moteur filtrée et
ENGINE_STALLING_THR = le seuil d'instabilité.

4. Procédé selon la revendication 3, **caractérisé en ce qu'**un filtre, préférablement un filtre de l'ordre premier, comportant une constante de temps T_filt =n*T, est utilisé pour former la vitesse de moteur $_{F\_E\_S}$, formant la valeur filtrée de la vitesse de moteur $_{F-E-S}$ selon la relation filtered _engine_speed = filtered_engine_speed + n* (Engine_Speed- Filtered_Engine Speed),
où : T= Loop Time (temps de loop), Filtered_Engine_Speed= vitesse de moteur filtrée,
n= numéro du loop actuel (n=2, 3, 4 ...) et Engine_Speed = vitesse du moteur actuelle.

5. Procédé selon l'une des revendications 1 à 4, **caractérisé en ce que** le seuil d'instabilité dynamique est déterminé dès la valeur de base spécifique de véhicule et d'une valeur proportionnelle au gradient de la vitesse de moteur, la valeur proportionnelle étant soustraite de la valeur de base.

6. Procédé selon l'une des revendications 1 à 5, **caractérisé en ce que** le seuil d'instabilité dynamique est formé selon la relation comme suite:

ENGINE_STALLING_THR = BASE_THR-
K2● FILTERED_ENGINE_SPEED_GRADIENT, où ENGINE_STALLING_THR= le seuil d'instabilité dynamique, BASE_THR = une valeur de base dépendante de véhicule, K2 = une constante dépendante de la vitesse de moteur, et
FILTERED_ENGINE_SPEED_GRADIENT= le gradient de la vitesse de moteur filtrée.

7. Procédé selon l'une des revendications 1 à 6, **caractérisé en ce que** la valeur de base est formée selon la relation comme suite:

BASE THR = ENGINE dependent value +f (VEHICLE_REFERENCE_VELOCITY),

où :

BASE_THR = la valeur de base dépendante de véhicule
ENGINE_dependent_value = une valeur dépendante de la vitesse de moteur + f (VEHICLE_REFERENCE_ VELOCITY) = une fonction dépendante de la vitesse de véhicule.

8. Procédé selon l'une des revendications 1 à 7, **caractérisé en ce que** le changement d'un état de réglage d'accroissement de pression à un état de réglage de réduction de pression est effectué toutefois au moins les conditions comme suite:

première valeur < seuil de glissement inférieur
secondaire valeur < seuil de stabilité supérieur
et que le changement d'un état de réglage de réduction de pression à un état de réglage d'accroissement de pression est effectué toutefois au moins les conditions comme suite:
première valeur ≥ seuil de glissement supérieur
secondaire valeur ≥ seuil de stabilité supérieur.

9. Procédé selon l'une des revendications 1 à 8, **caractérisé en ce que** le changement d'un état de réglage de réduction de pression à un état de mise hors circuit du réglage de glissement de traction est effectué toutefois au moins les conditions comme suite:

première valeur < seuil de glissement supérieur ou
secondaire valeur < seuil de stabilité supérieur
pression modèle de roue = 0, la pression modèle de roue correspondant à la force de freinage effective dans la roue en question calculée dans la pression modèle.

10. Procédé selon l'une des revendications 1 à 9, **caractérisé en ce qu'**un réglage de glissement est effectué comme mis hors circuit toutefois au moins l'une des conditions comme suite:

première valeur < seuil de glissement supérieur
secondaire valeur < seuil de stabilité supérieur.

11. Procédé selon l'une des revendications 1 à 10, **caractérisé en ce que** le changement d'un état de réglage de glissement de traction mis hors de circuit à un état de réglage d'accroissement de pression est effectué toutefois au moins les conditions comme suite:

première valeur ≥ seuil de glissement supérieur
secondaire valeur ≥ seuil de stabilité supérieur.

12. Procédé selon l'une des revendications 1 à 11, **caractérisé en ce qu'**un état réglage de pression d' accroissement est gardé toutefois au moins les conditions comme suite:

première valeur ≥ seuil de glissement inférieur
secondaire valeur ≥ seuil de stabilité inférieur.

13. Procédé selon l'une des revendications 1 à 12, **caractérisé en ce qu'**un état de réglage de pression d'accroissement est gardé toutefois au moins aux conditions comme suite:

première valeur < seuil de glissement supérieur, ou
secondaire valeur < seuil de stabilité supérieur
modèle de pression de roue > 0, la pression modèle de roue formant la pression de freinage réelle calculée dans un pression modèle dans la roue considérée.

14. Procédé selon l'une des revendications 1 à 13, **caractérisé en ce que** l'accroissement et la réduction de pression sont effectuées par l'opération graduelle d'une source de pression et/ou des soupapes à commander dans la mesure de la valeur première et secondaire.

15. Procédé selon la revendication 14, **caractérisé en ce que** le gradient d'accroissement de pression est déterminé sur la base du signal PAUSE_TIME relatif à la valeur première et modifié avec une valeur inversement proportionnelle à la stabilité de roulement selon la relation comme suite :

PAUSE_TIME <K3/ENGINE_STABILITY_RESERVE
dès lors: PAUSE_TIME = K3 /ENGINE_STABILITY_RESERVE.
où : PAUSE_TIME = temps de pause de la relation d'impulsion/pause dans l'accroissement et la réduction de pression, K3 = constante considérant la caractéristique du frein et la dimension des degrés de pression, ENGINE_STABILITY_RESERVE = stabilité de roulement du moteur.

16. Procédé selon la revendication 15, **caractérisé en ce que** le gradient d'accroissement de pression maximum formé en dépendance de la valeur secondaire dans une stabilité de roulement grande produit un accroissement de pression plus raide et dans une stabilité de roulement petite produit un accroissement de pression peu raide.

**17.** Procédé selon la revendication 14, **caractérisé en ce que** le gradient d'accroissement de pression est déterminé sur la base du signal PAUSE_TIME relatif à la valeur première et modifié à une valeur proportionnelle à la stabilité de roulement selon la relation comme suite :

PAUSE_TIME > K4● ENGINE_STABILITY RESERVE
dès lors:: PAUSE_TIME = K4● ENGINE_STABILITY_RESERVE
où: PAUSE_TIME = temps de pause de la relation d'impulsion/pause dans l'accroissement et la réduction de pression, K4 = constante considérant la caractéristique du frein et la dimension des degrés de pression, ENGINE_STABILITY_RESERVE = stabilité du roulement moteur.

**18.** Procédé selon la revendication 17, **caractérisé en ce que** le gradient de l'accroissement de pression minimum formé en dépendance de la valeur secondaire, dans une stabilité de roulement grande produit un accroissement de pression peu raide et dans une stabilité de roulement petite produit un accroissement de pression plus raide.

**19.** Dispositif à régler le glissement de traction, dans lequel un capteur premier détermine une valeur définissant un comportement de roue au moins à l'une des roues motrice, et règle en dépendance de cette valeur des états de réglage, comme l'accroissement, réduction ou maintien de force de freinage, et en dépendance de cette valeur commande le changement entre des états de réglage comme l'accroissement, réduction ou maintien de force de freinage ou la mise dans ou hors circuit du réglage de glissement de traction, **caractérisé par** un capteur secondaire déterminant au moins une autre valeur indiquant une stabilité de roulement du moteur résultant de la vitesse du moteur et d'un seuil d'instabilité dynamique, contenant une valeur de base spécifique à véhicule et une valeur proportionnelle au gradient de la vitesse de moteur et comprenant le capteur premier à commander des états de réglage et/ou à changer d'un état de réglage à l'autre.

**20.** Dispositif selon la revendication 19, **caractérisé en ce que** le capteur premier constamment considère la valeur secondaire pendant le réglage et /ou le changement.

**21.** Dispositif selon les revendications 19 ou 20, **caractérisé en ce que** le capteur secondaire forme la stabilité de roulement du moteur résultant de la différence d'une vitesse de moteur $_{F\_E\_S}$ et un seuil d'instabilité dynamique du moteur.

**22.** Dispositif selon les revendications 19 à 21, **caractérisé en ce que** le capteur secondaire calcule la stabilité de roulement selon la relation comme suite:

ENGINE_STABILITY_RESERVE=K1●(FILTERED_ENGINE_SPEED-
ENGINE_STALLING_THR), où : ENGINE_STABILITY_RESERVE = stabilité de roulement du moteur, K1 = une constante dépendante de la caractéristique du moteur et du poids moyen de véhicule, FILTERED_ENGINE_ SPEED = la vitesse de moteur filtrée et
ENGINE_STALLING_THR = le seuil d'instabilité.

**23.** Dispositif selon l'une des revendications 19 à 22, **caractérisé en ce que** le capteur secondaire comporte un filtre à former la vitesse de moteur$_{F\_E\_S}$ avec une constante de temps à filtrer T_filt = n*T, où : T= temps de passage du loop à réglage, n=facteur.

**24.** Dispositif selon la revendication 23, **caractérisé en ce que** le filtre comporte un dispositif-mémoire (205) stockant la valeur précédente Filtered_Engine_Speed, que le filtre comporte un dispositif-soustracteur (202) soustrayant la vitesse du moteur ENGINE_SPEED de la précédente valeur Filtered_Engine_Speed, que le filtre comporte un dispositif-multiplicateur multipliant la différence des valeurs ENGINE_SPEED - Filtered_Engine_Speed à un facteur n, et que le filtre comporte un dispositif à additionner ajoutant la différence multipliée du facteur n à la valeur Filtered_ Engine_Speed précédente.

**25.** Dispositif selon l'une des revendications 19 à 24, **caractérisé en ce que** le capteur secondaire détermine le seuil d'instabilité ENGINE_STALLING_THR d'une valeur de base BASE_THR spécifique de véhicule et d'une valeur K2● FILTERED_ENGINE_SPEED-_GRADIENT proportionnelle au gradient de la vitesse de moteur.

**26.** Dispositif selon les revendications 19, 21 ou 25, **caractérisé en ce qu'**un dispositif-soustracteur (206) est prévu soustrayant la valeur précédente Filtered_Engine_Speed de la valeur actuelle Filtered_Engine_Speed en l'amenant à un dispositif-multiplicateur (207) multipliant la différence à un facteur K2 constant.

**27.** Dispositif selon la revendication 26, **caractérisé en ce que** le facteur K2 constant se trouve dans une portée entre 0,1 s et 0,5 s, préférablement 0,2 s.

**28.** Dispositif selon l'une des revendications 19, 25 ou 26, **caractérisé en ce qu'**un compteur (200) est prévu déterminant une fonction de la vitesse de véhicule VEHICLE_REFERENCE_Velocity, et que le signal VEHICLE_REFERENCE_VELOCITY est transmis à l'entrée d'un dispositif à additionner (201), à l'autre entrée duquel est appliqué une constante Engine_dependent_value_spécifique de véhicule et le dispositif à additionner ajoute au signal Signal Engine_dependent_value le signal VEHICLE_ REFERENCE_VELOCITY en formant le signal BASE_THR.

**29.** Dispositif selon l'une des revendications 19 à 28, **caractérisé en ce qu'**un dispositif soustracteur (208) est prévu l'une entrée duquel étant reliée au dispositif à additionner (201) et l'autre entrée duquel étant reliée au dispositif-multiplicateur (207), soustrayant la valeur de base BASE_THR de la valeur proportionnelle K2● FILTERED_ENGINE_SPEED_GRADIENT en formant le signal ENGINE_STALLING_THR.

**30.** Dispositif selon l'une des revendications 19 à 29, **caractérisé par** un dispositif-soustracteur (209) et un dispositif-multiplicateur (210), le dispositif-soustracteur (210) formant la différence des signaux ENGINE_STALLING_THR et FILTERED_ENGINE_SPEED et le dispositif-multiplicateur (210) multipliant ledit signal à un facteur K1.

**31.** Dispositif selon l'une des revendications 19 à 30, **caractérisé en ce que** des dispositifs-comparaison (240, 341) et des organes de couplage (242, 243, 244, 245, 246, 247) logiques sont prévu effectuant un changement d'un état de réglage de l'accroissement de pression à un état de réduction de pression, toutefois au moins l'une des conditions comme suites :

la valeur première (BTCS_CONTROL_STATE < seuil de glissement inférieur
la valeur secondaire (ENGINE_STABILITY-RESERVE) < seuil de stabilité inférieur
et que les dispositifs-comparaison (240, 241) et les organes de commande logiques (242, 243, 244, 245, 246, 247) effectuant le changement d'un état de réglage de réduction de pression ou d'un état d'accroissement le couple moteur à un état de réglage d'accroissement de pression, toutefois au moins les conditions comme suite:
la valeur première (BTCS_CONTROL_STATE $\geq$ seuil de glissement supérieur
la valeur secondaire (ENGINE_STABILITY-RESERVE)$\geq$ seuil de stabilité supérieur

**32.** Dispositif selon l'une des revendications 19 à 31, **caractérisé en ce que** des dispositifs-comparaison (240, 341) et des organes de commande (242, 243, 244, 245, 246, 247) logiques sont prévus produisant un changement d'un état de réglage de réduction de pression à un état de mise hors circuit du réglage de glissement de traction, toutefois au moins l'une des conditions comme suite:

la valeur première < seuil de glissement supérieur
la valeur secondaire < seuil de stabilité supérieur
pression modèle de roue = 0, la pression de roue modèle formant la pression de freinage réelle dans la roue considérée calculée dans une pression modèle.

**33.** Dispositif selon l'une des revendications 19 à 32, **caractérisé en ce que** des dispositifs-comparaison (240, 341) et des organes de commande (242, 243, 244, 245, 246, 247) logiques reconnaissent un réglage de glissement de traction comme mis hors circuit, toutefois au moins l'une des conditions comme suite:

la valeur première < seuil de glissement supérieur
la valeur secondaire < seuil de stabilité supérieur.

**34.** Dispositif selon l'une des revendications 19 à 33, **caractérisé en ce que** des dispositifs-comparaison (240, 341) et des organes de commande (242, 243, 244, 245, 246, 247) logiques sont prévu produisant un changement d'un état de réglage de glissement de traction mis hors de circuit à un état de réglage d'accroissement de pression, toutefois au moins l'une des conditions comme suites:

la valeur première ≥ seuil de glissement supérieur
la valeur secondaire ≥ seuil de stabilité supérieur.

35. Dispositif selon l'une des revendications 19 à 34, **caractérisé en ce que** des dispositifs-comparaison (240, 341) et des organes de commande (242, 243, 244, 245, 246, 247) logiques sont prévu indiquant un état de réglage (105) d'accroissement de pression, toutefois au moins l'une des conditions comme suite:

la valeur première ≥ seuil de glissement inférieur
la valeur secondaire ≥ seuil de stabilité inférieur.

36. Dispositif selon l'une des revendications 19 à 35, **caractérisé en ce que** des dispositifs-comparaison (240, 341) et des organes de commande (242, 243, 244, 245, 246, 247) logiques sont prévus indiquant un état de réglage de réduction de pression, toutefois au moins l'une des conditions comme suite:

la valeur première < seuil de glissement supérieur, ou
la valeur secondaire < seuil de stabilité supérieur
pression modèle de roue = 0, la pression de roue modèle formant la force de freinage réelle dans la roue considérée calculée dans une pression modèle.

37. Dispositif selon l'une des revendications 19 à 36, **caractérisé en ce qu'**un capteur troisième est prévu modifiant l'opération graduelle d'une source de pression et/ou des soupapes de commande du capteur premier dans la mesure de la valeur première et secondaire.

38. Dispositif selon la revendication 37, **caractérisé en ce que** le gradient d'accroissement de pression est déterminé par l'intermédiaire du signal PAUSE_TIME relatif à la valeur première et est modifié dans un compteur 272, 270, 273 à une value inversement proportionnelle à la stabilité de roulement selon les relations comme suite:

PAUSE_TIME < K3 /ENGINE_STABILITY_RESERVE
dès lors: PAUSE_TIME = K3/ENGINE_STABILITY_RESERVE
où : PAUSE_TIME = temps de pause de la relation d'impulsion/pause dans l'accroissement et réduction de pression, K3 = constante considérant la caractéristique du frein et la dimension des degrés de pression, ENGINE_STABILITY_RESERVE = stabilité de roulement du moteur.

39. Dispositif selon la revendication 38, **caractérisé en ce que** le compteur (272, 270, 273) comporte un dispositif (272) formant un maximum de la valeur première et de la valeur secondaire, que le dispositif (272) est relié à un dispositif-diviseur (270) divisant la constante K3 en le maximum du signal ENGINE_STABILITY_RESERVE, que le dispositif (273) produit du signal PAUSE_TIME formé en dépendance de la valeur initiale du dispositif diviseur (270) le gradient maximum d'accroissement de pression, et que l'organe logique (290, 292, 275) en dépendance de la valeur première (292), au cas d'une grande stabilité de roulement produit un accroissement de pression plus raide et au cas d' une petite stabilité de roulement produit un accroissement de pression peu raide.

40. Dispositif selon la revendication 37, **caractérisé en ce que** le gradient de réduction de pression est déterminé par l'intermédiaire du signal PAUSE_TIME relatif à la valeur première et est modifiée à une valeur proportionnelle à la stabilité de roulement selon les relations comme suite:

PAUSE_TIME > K4● ENGINE_STABILITY_RESERVE
dès lors: PAUSE_TIME = K4● ENGINE_STABILITY_RESERVE
où : PAUSE_TIME = temps de pause de la relation d'impulsion/pause dans l'accroissement et la réduction de pression, K4 = constante considérant la caractéristique du frein et la dimension des degrés de pression, ENGINE_STABILITY_RESERVE = stabilité de roulement du moteur.

41. Dispositif selon les revendications 38 ou 40, **caractérisé en ce que** le compteur (272, 270, 273) comporte un dispositif-multiplicateur (271) multipliant la valeur secondaire ENGINE_STABILITY_RESERVE (280) en la constante K4; et qu'un dispositif (274) forme le gradient minimum de l'accroissement de pression du signal PAUSE TIME formé en dépendance de la valeur première et de la valeur initiale du dispositif-multiplicateur (274), et que des organes logiques (290, 292, 275), en dépendance de la valeur première (292, au cas d' une grande stabilité de roulement produisent une réduction de pression peu raide et au cas d' une petite stabilité de roulement produisent une réduction de pression plus raide.

**Fig. 1**

EP 1 192 069 B1

100 **BTCS inaktiv**

103 (Radschlupf < obere Schlupfschwelle)
ODER (E_S_R < obere Stabilitätsschwelle)

104 (Radschlupf >= obere Schlupfschwelle)
UND (E_S_R >= obere Stabilitätsschwelle)

101 **Druckaufbau**

105 (Radschlupf >= untere Schlupfschwelle)
UND (E_S_R >= untere Stabilitätsschwelle)

106 (Radschlupf < untere Schlupfschwelle)
ODER (E_S_R < untere Stabilitätsschwelle)

108 (Radschlupf >= obere Schlupfschwelle)
UND (E_S_R >= obere Stabilitätsschwelle)

109 ( (Radschlupf < obere Schlupfschwelle)
ODER (E_S_R < obere Stabilitätsschwelle) )
UND (Radmodelldruck == 0)

107 ( (Radschlupf < obere Schlupfschwelle)
ODER (E_S_R < obere Stabilitätsschwelle) )
UND (Radmodelldruck > 0)

102 **Druckabbau**

E_S_R = ENGINE_STABILITY_RESERVE

**Fig. 2**

EP 1 192 069 B1

**Fig. 3**

EP 1 192 069 B1

Fig. 4

Fig. 5

**Fig. 6**